# EUROPEAN PATENT APPLICATION

(11) **EP 4 701 159 A1**
(43) Date of publication of application: **25.02.2026**
(21) Application number: 23942890.7
(22) Date of filing: 29.06.2023
(51) Int. Cl.: H04L 67/00, H04L 67/10, H04L 67/51

(54) **RESOURCE MANAGEMENT METHOD, APPARATUS, AND SYSTEM**

(71) Applicant: Huawei Technologies Co., Ltd., Shenzhen, Guangdong 518129 (CN)
(72) Inventor: XING, Weijun, Shenzhen, Guangdong 518129 (CN); WU, Shaoyun, Shenzhen, Guangdong 518129 (CN); HUANG, Huanhuan, Shenzhen, Guangdong 518129 (CN); WANG, Jun, Shenzhen, Guangdong 518129 (CN); YAO, Qi, Shenzhen, Guangdong 518129 (CN)
(74) Representative: Gill Jennings & Every LLP
(86) International application number: PCT/CN2023/104079
(87) International publication number: WO 2025/000381

(57) **Abstract**

This application is applicable to the field of terminal technologies, and provides a resource management method, apparatus, and system. The method includes: A first network function receives a first message from a second network function. The first message is used to request the first network function to determine a terminal that executes traffic. The first network function determines at least one first terminal based on the first message, to provide a non-connectivity service corresponding to the traffic. The first network function sends information about the at least one first terminal or a request acknowledgment result of the first message to the second network function. In the solutions, in the non-connectivity service, the terminal may also serve as a service provider to provide the service for a network. Therefore, in this application, the first network function manages and invokes the terminal, and maintains a relationship between the terminal and the second network function, so that when the terminal serves as an execution node and is invoked by the network to provide the service, a network side selects an appropriate terminal to perform a corresponding non-connectivity service.

## Description

### TECHNICAL FIELD

This application relates to the field of communication technologies, and in particular, to a resource management method, apparatus, and system.

### BACKGROUND

A 5th generation (5th generation, 5G) mobile communication technology not only has a higher speed and better quality, but also allows network slicing to be created on a common physical infrastructure. Network slicing is an on-demand networking mode, and enables an operator to separate a plurality of virtual end-to-end networks from a unified infrastructure. Each network slice is logically isolated from a radio access network, a bearer network, and a core network to adapt to various types of applications. Currently, a 6th generation (6th generation, 6G) mobile communication technology that is developing may not only provide a connectivity service, but also provide a non-connectivity service, for example, an artificial intelligence (artificial intelligence, AI) service, a computation service, a data service, and a trusted service.

In the connectivity service, a terminal user, usually serving as a consumer, uses a service provided by a network. For the non-connectivity service, the terminal user may also provide a part of capability services of the terminal for the network, for example, a sensing capability and a computation capability of the terminal. However, currently, there is no corresponding mobile network technology to process how the network invokes the capability of the terminal.

### SUMMARY

This application provides a resource management method, apparatus, and system, to resolve a problem, in a conventional technology, that when a terminal serves as an execution node and is invoked by a network side to provide a non-connectivity service, the network side has no method to select a proper terminal to complete the non-connectivity service.

To achieve the foregoing objective, this application uses the following technical solutions.

According to a first aspect, a resource management method is provided, including: A first network function receives a first message from a second network function. The first message includes first indication information, the first indication information indicates traffic that the second network function requests to execute. The first message is used to request the first network function to determine a terminal that executes the traffic. The first network function determines at least one first terminal based on the first message, where the at least one first terminal is configured to provide a non-connectivity service corresponding to the traffic. The first network function sends information about the at least one first terminal or a request acknowledgment result of the first message to the second network function.

The first network function is configured to manage a resource and a status that are of a terminal that can be invoked, and is configured to open a resource request interface of the terminal, so that the second network function applies for or selects a terminal to execute a related traffic. The second network function is configured to control and manage the non-connectivity service. When the traffic needs to be executed, the second network function requests, by using the first network function, the terminal to execute the traffic.

An embodiment of this application provides a resource management method. In the method, a first network function receives a first message from a second network function, to request the first network function to determine a terminal that executes traffic. The first message includes first indication information indicating traffic that the second network function requests to execute. The first network function determines at least one first terminal based on the first message, where the at least one first terminal is configured to provide a non-connectivity service corresponding to the traffic. The first network function sends information about the at least one first terminal or a request acknowledgment result of the first message to the second network function, so that the second network function provides the non-connectivity service for the traffic via the first terminal. In the non-connectivity service, the terminal may also serve as a capability provider to provide the non-connectivity service for a network. Therefore, in this application, the first network function manages and invokes the terminal, and maintains a relationship between the terminal and the second network function, so that the terminal can also provide the non-connectivity service for the traffic of the second network function.

In a possible implementation, the first message includes traffic identifier and/or traffic context identification information. The traffic identifier identifies the traffic. The traffic context identification information identifies traffic context of the traffic.

In a possible implementation, the first message further includes second indication information. The second indication information indicates a range in which the at least one first terminal is located. It may be understood that information about the terminal required by the traffic is directly sent to the first network function through the second indication information.

In a possible implementation, the second indication information includes at least one of the following information: capability service information, range information, slice information, network information, a closed access group identifier, a group identifier, domain information, and an identifier of the terminal that executes the traffic. The capability service information identifies a capability of the terminal that is capable of executing the traffic. The range information identifies information about a location to which the terminal that is capable of executing the traffic belongs or at which the terminal is capable of providing the non-connectivity service. The slice information identifies information about a slice to which the terminal that is capable of executing the traffic belongs or at which the terminal is capable of providing the non-connectivity service. The network information identifies information about a network to which the terminal that is capable of executing the traffic belongs or at which the terminal is capable of providing the non-connectivity service. The group identifier identifies a group to which the terminal that is capable of executing the traffic belongs. The domain information identifies a domain to which the terminal that is capable of executing the traffic belongs.

In a possible implementation, before the first network function sends the information about the at least one first terminal or the request acknowledgment result of the first message to the second network function, the method provided in this embodiment of this application further includes: The first network function creates the traffic context for the traffic. The traffic context includes the information about the at least one first terminal and information about the second network function.

In a possible implementation, after the first network function sends the information about the at least one first terminal or the request acknowledgment result of the first message to the second network function, the method further includes: The first network function re-determines at least one second terminal for the traffic when determining that a part or all of the at least one first terminal is not capable of executing the traffic.

In a possible implementation, after the first network function re-determines the at least one second terminal for the traffic when determining that the part or all of the at least one first terminal is not capable of executing the traffic, the method provided in this embodiment of this application further includes: The first network function updates the information about the at least one first terminal in the traffic context. In this way, the traffic context may record the reselected second terminal.

In a possible implementation, before the first network function receives the first message from the second network function, the method further includes: The first network function obtains, from a third network function, subscription information or policy information corresponding to the traffic and/or the first terminal.

The subscription information is used by an operator and a user to confirm that the terminal can use a specific network service of the operator and details of the service, and the policy information is traffic execution information that can be controlled by the operator.

In a possible implementation, after receiving the first message from the second network function, the method provided in this embodiment of this application further includes: The first network function sends a second message to the at least one first terminal, where the second message is used to request to execute the traffic. The first network function receives a third message from the first terminal, where the third message is used to determine that the at least one first terminal executes the traffic.

In a possible implementation, after the first network function receives the third message from the first terminal, the method provided in this embodiment of this application further includes: The first network function updates the information about the at least one first terminal in the traffic context. Therefore, the traffic context is information about the terminal that can provide the non-connectivity service for the traffic.

In a possible implementation, after the first network function receives the third message from the first terminal, the method provided in this embodiment of this application further includes: The first network function updates a user context of the at least one first terminal. The user context is used to record the information about the at least one first terminal, information about the traffic context, and the information about the second network function.

In a possible implementation, after the first network function receives the first message from the second network function, the method provided in this embodiment of this application further includes: The first network function allocates a temporary identifier to the at least one first terminal. The first network function sends the temporary identifier to the second network function. In this way, when the at least one first terminal changes to the at least one second terminal due to traffic change, an identifier of the at least one second terminal is still a temporary identifier, and the second network function does not need to sense the change of the terminal.

In a possible implementation, after the first network function allocates the temporary identifier to the at least one first terminal, the method provided in this embodiment of this application further includes: The first network function updates the information about the at least one first terminal in the traffic context as the temporary identifier. The first network function adds the temporary identifier to the user context.

In a possible implementation, when the first network function allocates the temporary identifier to the at least one first terminal, after the first network function sends the information about the at least one first terminal or the request acknowledgment result of the first message to the second network function, the method provided in this embodiment of this application further includes: The first network function obtains configuration information of the traffic from the second network function, where the configuration information includes the information about the at least one first terminal. The first network function sends the configuration information to the at least one first terminal or an access network device associated with the at least one first terminal.

In a possible implementation, the configuration information further includes a reporting trigger condition, and the reporting trigger condition includes an execution status of the traffic, a location of the at least one first terminal, and a battery level of the at least one first terminal.

In a possible implementation, before the first network function receives the first message from the second network function, the method provided in this embodiment of this application includes: The first network function obtains information about one or more terminals. The one or more terminals include the at least one first terminal.

In a possible implementation, that the first network function obtains the information about the one or more terminals includes: The first network function obtains the information about the one or more of the terminals from a connection-related network function.

For example, the first network function sends a fourth message to the connection-related network function, where the fourth message is used to request the connection-related network function to send, to the one or more terminals, a message used to request to execute the traffic. The first network function obtains a fifth message from the connection-related network function, where the fifth message is used to determine that the at least one first terminal executes the traffic.

The connection-related network function is further configured to send a message to the at least one first terminal, where the message is used to request to execute the traffic. The connection-related network function is further configured to receive a message from the at least one first terminal, where the message is used to request the connection-related network function to send the fifth message to the first network function.

In a possible implementation, the connection-related network function is an access and mobility management function and/or a session management function.

In a possible implementation, the first network function is integrated into a binding support function, and that the first network function obtains the information about the one or more terminals includes: The first network function obtains binding information and the information about the one or more terminals from a policy control function.

The policy control function is configured to obtain the information about the at least one first terminal from the connection-related network function. The connection-related network function is configured to add, to the user context of the at least one first terminal, information about the traffic executed by the first terminal. The connection-related network function may be further configured to add the information about the traffic context and the information about the second network function to the user context.

The policy control function is further configured to receive a message from the connection-related network function, where the message is used to feed back the at least one first terminal corresponding to the traffic.

In a possible implementation, the second network function is configured to obtain a service request, and generate the first indication information based on the service request.

According to a second aspect, a resource management method is provided, including: A second network function sends a first message to a first network function. The first message includes first indication information, the first indication information indicates traffic that the second network function requests to execute, and the first message is used to request the first network function to determine a terminal that executes the traffic. The second network function obtains information about at least one first terminal or a request acknowledgment result of the first message from the first network function. The second network function sends configuration information of the traffic to the first network function, and/or the at least one first terminal, and/or an access network device associated with the at least one first terminal. The configuration information includes the information about the at least one first terminal, and the at least one first terminal is configured to execute the traffic

In the foregoing solution, the first message sent by the second network function to the first network function is used to request the first network function to determine the terminal that executes the traffic. The first message includes the first indication information indicating the traffic that the second network function requests to execute. The first network function determines the at least one first terminal based on the first message, where the at least one first terminal is configured to provide a non-connectivity service corresponding to the traffic. The second network function obtains the information about the at least one first terminal or the request acknowledgment result of the first message from the first network function, so that the second network function provides the non-connectivity service for the traffic via the first terminal. In the non-connectivity service, the terminal may also serve as a service provider. Therefore, the first network function manages and invokes the terminal, and maintains a relationship between the terminal and the second network function, so that the terminal can also provide the non-connectivity service for the traffic of the second network function.

In a possible implementation, the method provided in this embodiment of this application further includes: The second network function obtains a temporary identifier of the at least one first terminal.

In a possible implementation, the method provided in this embodiment of this application further includes: The second network function sends a sixth message to the first network function. The sixth message is used to request the first network function to send, to a connection-related network function, information used to request to execute the traffic. The second network function obtains, from the first network function, information about executing the traffic by the at least one first terminal.

In a possible implementation, the method provided in this embodiment of this application further includes: The second network function sends a seventh message to a policy control function. The seventh message is used to request the policy control function to send, to the connection-related network function, information used to request to execute the traffic. The second network function obtains, from the policy control function, information about executing the traffic by the at least one first terminal.

According to a third aspect, an embodiment of this application provides a resource management apparatus. The resource management apparatus can implement the method in any one of the first aspect or the possible implementations of the first aspect, and therefore can further implement beneficial effect in any one of the first aspect or the possible implementations of the first aspect. The resource management apparatus may be a first network function, or may be an apparatus that supports a first network function in implementing the method in any one of the first aspect or the possible implementations of the first aspect, for example, a chip used in the first network function. The resource management apparatus may implement the foregoing method by using software, hardware, or hardware executing corresponding software.

In an example, the resource management apparatus may include a processing module and a communication module. The communication module is configured to perform a receiving/sending-related step performed by the first network function in any one of the first aspect or the possible implementations of the first aspect. The processing module is configured to perform a processing-related step performed by the first network function in any one of the first aspect or the possible implementations of the first aspect.

For example, when the resource management apparatus is a chip or a chip system in the first network function, the processing module may be a processor, and the communication module may be a communication interface. For example, the communication interface may be an input/output interface, a pin, a circuit, or the like. The processing module executes instructions stored in a storage unit, to enable the first network function to implement the resource management method in any one of the first aspect or the possible implementations of the first aspect. The storage unit may be a storage unit in the chip (for example, a register or a cache), or may be a storage unit outside the chip in the first network function (for example, a read-only memory or a random access memory).

According to a fourth aspect, an embodiment of this application provides a resource management apparatus. The resource management apparatus can implement the method in any one of the second aspect or the possible implementations of the second aspect, and therefore can further implement beneficial effect in any one of the second aspect or the possible implementations of the second aspect. The resource management apparatus may be a second network function, or may be an apparatus that supports a second network function in implementing the method in any one of the second aspect or the possible implementations of the second aspect, for example, a chip used in the second network function. The resource management apparatus may implement the foregoing method by using software, hardware, or hardware executing corresponding software.

In an example, the resource management apparatus may include a processing module and a communication module. The communication module is configured to perform a receiving/sending-related step performed by the second network function in any one of the second aspect or the possible implementations of the second aspect. The processing module is configured to perform a processing-related step performed by the second network function in any one of the second aspect or the possible implementations of the second aspect.

For example, when the resource management apparatus is a chip or a chip system in the second network function, the processing module may be a processor, and the communication module may be a communication interface. For example, the communication interface may be an input/output interface, a pin, a circuit, or the like. The processing module executes instructions stored in a storage unit, to enable the second network function to implement the resource management method in any one of the second aspect or the possible implementations of the second aspect. The storage unit may be a storage unit in the chip (for example, a register or a cache), or may be a storage unit outside the chip in the second network function (for example, a read-only memory or a random access memory).

According to a fifth aspect, this application provides a first network function, including a processor. The processor is connected to a memory. The processor reads instructions stored in the memory, so that the first network function performs the method in any one of the first aspect or the optional designs of the first aspect. The first network function may further include the memory. Optionally, the first network function may further include a communication interface.

According to a sixth aspect, this application provides a second network function, including a processor. The processor is connected to a memory. The processor reads instructions stored in the memory, so that the second network function performs the method in any one of the second aspect or the optional designs of the second aspect. The second network function may further include the memory. Optionally, the second network function may further include a communication interface.

According to a seventh aspect, this application provides a resource management system, including a first network function, a second network function, and at least one first terminal. The first network function performs the method in any one of the first aspect or the possible implementations of the first aspect, the second network function performs the method in any one of the second aspect or the possible implementations of the second aspect, and the at least one first terminal is configured to provide a non-connectivity service for traffic of the second network function.

According to an eighth aspect, this application provides a computer-readable storage medium, including computer-readable instructions. When the instructions are run on a computer, the computer is enabled to perform the method in any one of the first aspect or the possible implementations of the first aspect.

According to a ninth aspect, this application provides a computer-readable storage medium, including computer-readable instructions. When the instructions are run on a computer, the computer is enabled to perform the method in any one of the second aspect or the possible implementations of the second aspect.

According to a tenth aspect, this application provides a computer program product, including a computer program. When the program is run on a computer, the computer is enabled to perform the method in any one of the first aspect or the possible implementations of the first aspect.

According to an eleventh aspect, this application provides a computer program product, including a computer program. When the program is run on a computer, the computer is enabled to perform the method in any one of the second aspect or the possible implementations of the second aspect.

According to a twelfth aspect, this application provides a chip, used in a first network function. The chip includes at least one processor and a communication interface. The communication interface is coupled to the at least one processor. The processor is configured to run a computer program or instructions, to perform the method in any one of the first aspect or the possible implementations of the first aspect. The communication interface is configured to communicate with another module outside the chip.

According to a thirteenth aspect, this application provides a chip, used in a second network function. The chip includes at least one processor and a communication interface. The communication interface is coupled to the at least one processor. The processor is configured to run a computer program or instructions, to perform the method in any one of the second aspect or the possible implementations of the second aspect. The communication interface is configured to communicate with another module outside the chip.

### BRIEF DESCRIPTION OF DRAWINGS

FIG. 1 is a diagram of an architecture of a communication system according to an embodiment of this application;
FIG. 2 is a diagram of a 5th generation (5th generation, 5G) network architecture according to an embodiment of this application;
FIG. 3 is a schematic flowchart of a resource management method according to an embodiment of this application;
FIG. 4 is a schematic flowchart 1 of a specific implementation of a resource management method according to an embodiment of this application;
FIG. 5 is a schematic flowchart 2 of a specific implementation of a resource management method according to an embodiment of this application;
FIG. 6 is a schematic flowchart 3 of a specific implementation of a resource management method according to an embodiment of this application;
FIG. 7 is a schematic flowchart 4 of a specific implementation of a resource management method according to an embodiment of this application;
FIG. 8 is a diagram of a structure of a resource management apparatus according to an embodiment of this application;
FIG. 9 is a diagram of a hardware structure of a communication device according to an embodiment of this application; and
FIG. 10 is a diagram of a structure of a chip according to an embodiment of this application.

### DESCRIPTION OF EMBODIMENTS

To clearly describe the technical solutions in embodiments of this application, terms such as "first" and "second" are used in embodiments of this application to distinguish between same items or similar items that have basically the same functions and purposes. For example, a first message and a second message are merely used to distinguish between different messages, and do not limit a sequence of the first message and the second message. A person skilled in the art may understand that the terms such as "first" and "second" do not limit a quantity or an execution sequence, and the terms such as "first" and "second" do not indicate a definite difference.

It should be noted that in this application, the term such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

Steps in a resource management method provided in embodiments of this application are merely examples. Not all steps are mandatory steps, or not all content in each piece of information or message is mandatory. In a use process, addition or deletion may be performed as required.

A same step or steps or messages having a same function in embodiments of this application may be mutually referenced in different embodiments.

The system architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems. In embodiments of this application, examples in which the provided methods are applied to an NR system or a 5th generation mobile communication technology (5th generation mobile networks or 5th generation wireless systems, 5th-Generation, 5G) network are used for description.

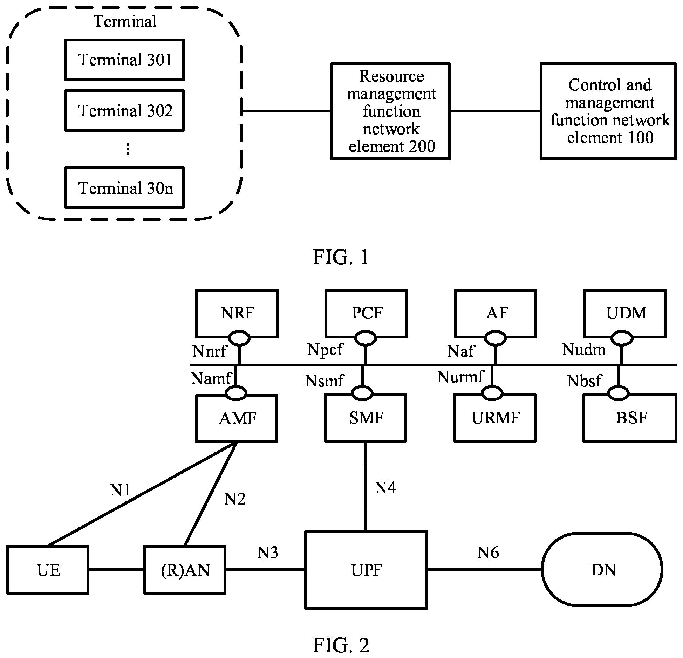

FIG. 1 is a diagram of an architecture of a communication system according to an embodiment of this application. The system includes a control and management function network element 100, a resource management function network element 200, and one or more terminals (for example, a terminal 301, a terminal 302, ..., and a terminal 30n).

The control and management function network element 100 is configured to manage a non-connectivity service. The non-connectivity service includes but is not limited to a task service, an artificial intelligence service, a computation service, a sensing service, and a data service.

In an example, the non-connectivity service is a task service, the control and management function network element 100 is a task anchor (task anchor, TA) and a task scheduler (task scheduler, TS), the TA is used to manage a task, the TS is used to request a computing resource required by the task, and the like.

In another example, if the non-connectivity service is a computation service, the control and management function network element 100 is computing control (computing control, CC) and a computing scheduler (computing scheduler, CS).

It may be understood that each type of non-connectivity service has a corresponding control and management function network element 100. Details are not described herein again.

The resource management function network element 200 is configured to manage a resource and a status that are of a terminal that can be invoked, and is configured to open a resource request interface of the terminal, to provide application or selection of the terminal for the control and management function network element 100.

The communication system shown in FIG. 1 may be used in a 5th generation (5th generation, 5G) network architecture shown in FIG. 2, and certainly, may also be used in a future network architecture, for example, a 6th generation (6th generation, 6G) network architecture. This is not limited in this application.

For example, the communication system shown in FIG. 1 is used in a 5G network architecture. FIG. 2 is a diagram of a 5G network architecture. A network element or an entity corresponding to the control and management function network element 100 in FIG. 1 may be deployed in a data network (data network, DN) in the 5G network architecture shown in FIG. 2. A network element or an entity corresponding to the resource management function network element 200 in FIG. 1 may be a user resource management function (UE Resource Management Function, URMF) network element in the 5G network architecture shown in FIG. 2, or may be deployed in an access and mobility management function (access and mobility management function, AMF) network element, a session management function (session management function, SMF) network element, or a binding support function (binding support function, BSF) network element in the 5G network architecture shown in FIG. 2. A network element or an entity corresponding to the terminal in FIG. 1 may be user equipment (user equipment, UE) in the 5G network architecture shown in FIG. 2.

In the network architecture shown in FIG. 2, the user resource management function is an example name of a network element, a network function, or an entity that can manage a terminal resource. It may be understood that the user resource management function may also have another name. This is not limited in this application.

In this application, the network element is an implementation of a function. For example, the session management function may be implemented in a form of the SMF network element, or may be implemented in another form, for example, a network function or an entity. This is not limited in this application.

In addition, as shown in FIG. 2, the 5G network architecture may further include a network repository function (network repository function, NRF) network element, a policy control function (policy control function, PCF) network element, a unified data management (unified data function, UDM) function network element, an application function (application function, AF) network element, a user plane function (user plane function, UPF) network element, and the like. This is not specifically limited in embodiments of this application.

It should be noted that the access and mobility management function (access and mobility management function, AMF), the session management function (session management function, SMF), the binding support function (binding support function, BSF), and the like are network function names in the 5G network architecture. In a future network architecture (for example, a 6G network architecture), these network functions may also have other names. This is not limited in this application.

The following describes functions of the network elements.

The DN is a network located outside an operator network. The operator network may access a plurality of DNs, and a plurality of services may be deployed on the DN, to provide services such as data and/or a voice for a terminal device. For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company.

The AMF network element mainly performs functions such as mobility management and access authentication/authorization. In addition, the AMF network element is further responsible for transmitting a user policy between a terminal and the PCF network element.

The SMF network element is mainly responsible for session management in a network architecture, and functions mainly include session establishment, modification, release, and the like. For example, the session management network element allocates an internet protocol (internet protocol, IP) address to a terminal, or selects a UPF that provides a packet forwarding function.

The BSF network element is mainly responsible for establishing a binding relationship between an identifier or an address of UE and a PCF that provides a service for the UE.

The NRF network element may be configured to provide a network element discovery function, and provide, based on a request of another network element, network element information corresponding to a network element type. The NRF network element further provides a network element management service, for example, network element registration, update, and deregistration, and network element status subscription and push.

The PCF network element is mainly responsible for supporting a unified policy management network behavior, providing a policy rule for a control plane function for execution, and mainly obtaining policy-related information from a unified data repository network element (unified data repository, UDR) to make a policy decision. The policy information may be a user policy, an access and mobility management policy, a session management policy, or the like. The UDR provides a capability of storing subscripted data, policy data, and capability exposure related data.

The AF network element is mainly responsible for interacting with a core network to provide a service, for example, impact on traffic routing, exposure of a network access capability, interaction with a policy decision network element to perform policy management and control, and providing information for the core network.

The AF network element may be a third-party functional entity, or may be an operator-deployed application service, for example, an IP multimedia subsystem (IP multimedia subsystem, IMS) voice call service. The AF network element may also be referred to as an application server.

The UDM network element is mainly responsible for subscription management, access authorization, authentication information generation, and the like for a user.

The UPF network element, serving as an interface to a data network, implements functions such as user-plane data forwarding, session/flow-level charging statistics, and bandwidth throttling. Refer to the network architecture shown in FIG. 2, the UPF directly connected to the DN is referred to as a protocol data unit session anchor (protocol data unit session anchor, PSA).

In FIG. 2, the user equipment accesses a network via a (R)AN device, and communicates with the AMF network element through an N1 interface (N1 for short). The SMF network element communicates with one or more UPF network elements through an N4 interface (N4 for short). The UPF network element communicates with the DN through an N6 interface (N6 for short). The (R)AN device communicates with the AMF network element through an N2 interface (N2 for short). The (R)AN device communicates with the UPF network element through an N3 interface (N3 for short).

Control plane network elements may also interact with each other through a service-oriented interface. For example, as shown in FIG. 2, the AMF network element, the SMF network element, the UDM network element, or the PCF network element interact with each other through a service-oriented interface. For example, an external service-oriented interface provided by the AMF network element may be Namf. An external service-oriented interface provided by the SMF network element may be Nsmf. An external service-oriented interface provided by the UDM network element may be Nudm. An external service-oriented interface provided by the PCF network element may be Npcf. An external service-oriented interface provided by the AF network element may be Naf. An external service-oriented interface provided by the NRF network element may be Nnrf. It should be understood that, for related descriptions of names of various service-oriented interfaces, refer to a diagram of a 5G system architecture (5G system architecture) in a conventional technology. Details are not described herein.

It should be noted that the AMF network element, the SMF network element, the UDM network element, the UPF network element, the PCF network element, and the like in FIG. 2 are merely names, and the names do not constitute any limitation on devices. In a 5G network and another future network, network elements or entities corresponding to the AMF network element, the SMF network element, the UDM network element, the UPF network element, and the PCF network element may alternatively have other names. This is not specifically limited in embodiments of this application. For example, the UDM network element may alternatively be replaced with a home subscriber server (home subscriber server, HSS), a user subscription database (user subscription database, USD), a database entity, or the like. This is uniformly described herein, and details are not described subsequently.

In FIG. 2, Nnrf, Nurmf, Npcf, Nudm, Naf, Namf, Nsmf, Nbsf, N1, N2, N3, N4, and N6 are interface sequence numbers. For meanings of the interface sequence numbers, refer to meanings defined in the 3rd generation partnership project (3rd generation partnership project, 3GPP) standard protocol. This is not limited herein.

It may be understood that the foregoing network elements or functions may be network elements in a hardware device, software functions running on dedicated hardware, or virtualized functions instantiated on a platform (for example, a cloud platform).

Optionally, the network element or function may be implemented by one device, may be jointly implemented by a plurality of devices, or may be a functional module in one device. This is not specifically limited in embodiments of this application. The control and management function network element 100 in this application may be located in the DN in FIG. 2, and the resource management function network element 200 may be located in the AMF network element, the SMF network element, or the BSF network element, or may be a network element that has functions of the DN, the SMF network element, the AMF network element, and the BSF network element in future communication, for example, a 6G network. This is not limited in this application.

The user equipment (user equipment, UE) is a device that allows a user to access a network service. In the 3GPP standard, an interface between the user equipment and a network is a radio interface.

The UE may include various handheld devices, vehicle-mounted devices, wearable devices, and computation devices that have a wireless communication function, or other processing devices connected to a wireless modem, and may further include a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, user equipment (user equipment, UE), a mobile station (mobile station, MS), a terminal device (terminal device), relay user equipment, or the like. The relay user equipment may be, for example, a 5G residential gateway (residential gateway, RG). For ease of description, in this application, the user equipments mentioned above are collectively referred to as terminals.

It should be understood that the terminal in embodiments of this application may alternatively be a terminal device in internet of things or a terminal in a plurality of vertical industry application fields such as a port, an intelligent factory, railway transportation, logistics, an uncrewed aerial vehicle, and an autonomous driving vehicle, for example, a mobile robot (mobile robot), an automated guided vehicle (automated guided vehicle, AGV), an autonomous driving vehicle, a control device and a sensor on a train, or a control device and a sensor (sensor) deployed in a factory.

For example, in embodiments of this application, the terminal may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs. The terminal may alternatively be a sensor device used in a factory.

The access network device is a device having a function of providing network access, for example, a radio access network (radio access network, RAN) or a base station. The access network device may specifically include the base station (base station, BS) (for example, a RAN base station), or include the base station, a radio resource management device configured to control the base station, and the like. The network device may further include a relay station (relay device), an access point, a base station in a future 5G network, a base station in a future evolved PLMN network, an NR base station, or the like. The network device may be a wearable device or a vehicle-mounted device. The access network device may alternatively be a communication chip that has a communication module.

For example, the access network device includes but is not limited to: a next generation NodeB (gNodeB, gNB) in 5G, an evolved NodeB (evolved NodeB, eNB) in a long term evolution (long term evolution, LTE) system, a radio network controller (radio network controller, RNC), a radio controller in a cloud radio access network (cloud radio access network, C-RAN) system, a base station controller (base station controller, BSC), a home NodeB (for example, a home evolved NodeB or a home NodeB, HNB), a baseband unit (baseband unit, BBU), a transmission reception point (transmission reception, TRP), a transmission point (transmission point, TP), a mobile switching center, a base transceiver station (base transceiver station, BTS) in a global system for mobile communications (global system for mobile communications, GSM) or code division multiple access (code division multiple access, CDMA) network, a nodebase station (nodebase station, NB) in wideband code division multiple access (wideband code division multiple access, WCDMA), an evolved (evolved) NB (eNB or eNodeB) in LTE, a base station device in a future 5G network, an access network device in a future evolved PLMN network, a wearable device, or a vehicle-mounted device.

In some related technologies, different network functions in an existing 5G network architecture may register capabilities and identity information (for example, an identifier or an address) of the network functions with a network repository function (network repository function, NRF). When the terminal needs to invoke a service of a network function, or a network function needs to invoke a service of another network function, the terminal or the network function may send a network function discovery request message to the NRF. The NRF feeds back identity information of the network function to the terminal based on the request message, or feeds back identity information of the another network function to the network function based on the request message.

In some other related technologies, the terminal may also provide a non-connectivity service for a network side, for example, a sensing capability, a computation capability, and a data processing capability of the terminal. In other words, the terminal may also become a provider of the non-connectivity service. However, currently, the method is mainly oriented to static network function registration and discovery, and is not applicable to the terminal. In addition, mobility of the terminal causes a frequent location change, and a centralized registration manner causes information frequent update of the terminal, resulting in wasting signaling overheads. Secondly, if the network side needs to invoke a capability of the terminal, the network side does not need to know a specific identity of the terminal. In this way, a request manner based on a deterministic identity (for example, an identifier of the terminal) is not applicable to a resource request of the terminal.

Therefore, when the terminal serves as an execution node and may be invoked by the network side and provide the non-connectivity service, currently, there is no proper method for processing a problem of how the network side selects a proper terminal to execute a corresponding non-connectivity service.

Based on this, an embodiment of this application provides a resource management method. In the method, a network function that can be responsible for resource management of a terminal in a network is introduced, to select a corresponding terminal based on a request from a network side to provide a non-connectivity service.

In embodiments of this application, a specific structure of an execution body of the resource management method is not specially limited in embodiments of this application, provided that the execution body can run a program that records code for performing the resource management method in embodiments of this application, to perform communication based on the resource management method in embodiments of this application. For example, the execution body of the resource management method provided in embodiments of this application may be a functional module that can invoke a program and execute the program in a first network function, or may be a communication apparatus used in a first network function, for example, a chip, a chip system, or an integrated circuit. The chip, the chip system, or the integrated circuit may be disposed inside the first network function, or may be independent of the first network function. This is not limited in embodiments of this application.

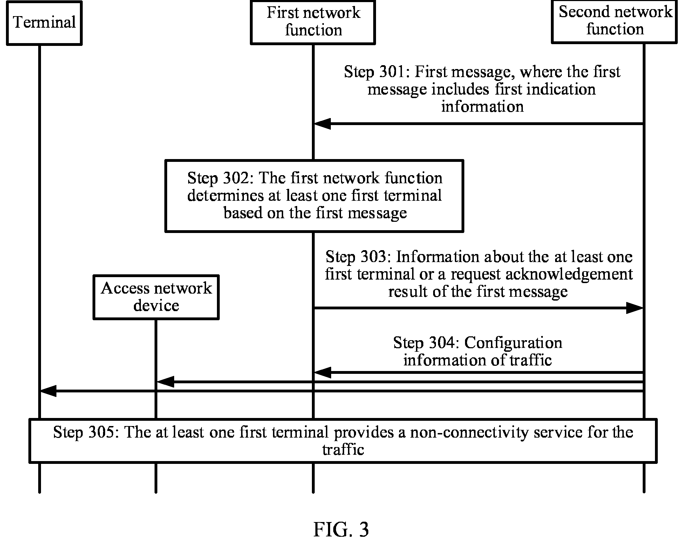

Refer to FIG. 3. An embodiment of this application provides a schematic interaction flowchart of a resource management method. The method includes the following steps.

Step 301: A second network function sends a first message to a first network function, and correspondingly, the first network function receives the first message from the second network function.

For example, the first message includes first indication information. The first indication information indicates traffic that the second network function requests to execute. The first message is used to request the first network function to determine a terminal that executes the traffic.

For example, the first network function is configured to manage a resource and a status that are of a terminal that can be invoked, and/or is configured to open a resource request interface of the terminal, so that the second network function applies for or selects a terminal to execute a related traffic.

For example, the first network function receives related information of 10 terminals, including location information, capability information, status information (for example, a terminal load status), and the like of each terminal. When the second network function needs to execute traffic A, because the first network function has the related information of the 10 terminals, the second network function may select or apply for, by using the first network function, one or more terminals that can execute the traffic A from the 10 terminals.

The second network function is used to control and manage a non-connectivity service. For example, when the second network function needs to execute the traffic, the second network function requests, from the first network function, information about the terminal configured to execute the traffic.

In an example, the non-connectivity service in this embodiment of this application includes but is not limited to a task service, a computation service, a data service, a trusted service, and an artificial intelligence (artificial intelligence, AI) service.

It may be understood that the foregoing listed non-connectivity services are merely used as examples, and more other new services may be provided in a future communication network. This is not limited in embodiments of this application.

In embodiments of this application, the task service may mean that a network service implements resource collaboration and quality of service (quality of service, QoS) assurance of the traffic of a plurality of types of resources and a plurality of communication nodes in a form of "tasks". A communication network is from a single dimension of connectivity services to new dimensions of services such as connectivity, computation, data, intelligence, trustworthiness services encapsulated and provided in a form of tasks, to implement service level agreement (service level agreement, SLA) guarantees for various AI, sensing, computation, and data services, thereby further expands an application scenario of the communication network.

The computation service may mean that in addition to providing a basic connectivity service, a node in a network infrastructure may further provide an additional computation function to perform in-depth convergence of communication and computation, for example, sensing and computing a status of a communication resource in real time, and performing collaborative control on the communication resource and a computation resource, to meet QoS requirements such as an end-to-end ultra-low latency, data security protection, and sustainable energy saving in a dynamic and complex wireless network environment.

The data service is intended to provide data as a service, for example, may include collection or capturing of original data, data preprocessing, data storage, data privacy and security protection, data sharing or transaction, data source tracing, data analysis, and a data dictionary.

The trusted service may be externally providing a trusted function to the outside as a service, and may include a blockchain service, a remote attestation service, a privacy protection service, and the like.

The AI service may perform AI training or inference in a network to provide intelligent capabilities that adapt to different application scenarios.

In different non-connectivity services, specific implementations of the second network function are also different.

For example, when the non-connectivity service is a task service, the second network function may be a task anchor (task anchor, TA) and a task scheduler (task scheduler, TS). It should be noted that the task anchor and the task scheduler are examples of names, or may have other names. This is not limited in this application. In this embodiment of this application, the task anchor and the task scheduler are used as examples.

For example, when the non-connectivity service is a computation service, the second network function may be computing control (computing control, CC) and a computing scheduler (computing scheduler, CS). It should be noted that the computing control and the computing scheduling are examples of names, or may have other names. This is not limited in this application.

With reference to FIG. 1, the first network function in this embodiment of this application may be the resource management function network element 200 shown in FIG. 1. The second network function may be the control and management function network element 100 shown in FIG. 1. The terminal may be any one or more terminals shown in FIG. 1.

In a possible embodiment of this application, the first network function may further receive traffic identifier and/or traffic context identification information from the second network function. The traffic identifier identifies the traffic. The traffic context identification information identifies traffic context of the traffic.

For example, the first message may further include the traffic identifier and/or the traffic context identification information. The traffic identifier and/or the traffic context identification information may be sent by the second network function to the first network function through the first message. In addition, the traffic identifier and/or the traffic context identification information may be carried in a message other than the first message, and sent by the second network function to the first network function.

Certainly, in an example, to reduce signaling overheads, the first indication information may further indicate the traffic identifier and/or the traffic context identification information. In other words, in addition to indicating that the second network function requests to execute the traffic, the first indication information may further include the traffic identifier and/or the traffic context identification information. The traffic identifier and/or the traffic context identification information may alternatively be carried in the first message. In other words, the traffic identifier and/or the traffic context identification information is information other than the first indication information in the first message.

For example, the traffic identifier may be a task traffic identifier (identifier, ID), a sensing traffic ID, a computation traffic ID, or the like. This is not limited in embodiments of this application.

In a possible embodiment of this application, the first network function may further receive second indication information from the second network function, and the second indication information indicates a range in which at least one first terminal is located. The second indication information may describe information about the terminal requested by the traffic.

In an example, the first message further includes the second indication information. In other words, the second network function may indicate, to the first network function by using the second indication information, information about the terminal that provides the non-connectivity service for the traffic. Certainly, the second indication information may also be considered as requirement information of the second network function.

It may be understood that the second indication information further indicates a quantity of terminals provided by the first network function for the second network function. For example, at least three terminals need to provide the non-connectivity service for the traffic. Certainly, when the second network function does not indicate the quantity of terminals that are required by the first network function and that provide the non-connectivity service for the traffic, the first network function may autonomously determine, based on the range limited by the second indication information, the quantity of terminals that provide the non-connectivity service for the traffic.

In a possible implementation, the second indication information includes at least one of the following information: capability service information, range information, slice information, network information, a closed access group identifier, a group identifier, domain information, and an identifier of the terminal that executes the traffic.

The capability service information identifies a capability of the terminal required for executing the traffic, for example, a capability (for example, a computation capability, a data processing capability, or a sensing capability) identifier of the terminal.

For example, if the capability service information included in the second indication information is a computation capability identifier, it indicates that the second network function requests the first network function to provide a terminal that has a computation capability to provide a non-connectivity service for the traffic A. In this way, the first network function may select, from a plurality of terminals based on the computation capability identifier provided by the second network function, at least one terminal (for example, a terminal 1, a terminal 2, and a terminal 3) that supports the computation capability as the at least one first terminal.

The range information identifies a location to which the terminal that executes the traffic belongs or at which the terminal is capable of providing the non-connectivity service. In other words, the range information identifies a location at which a terminal needs to provide a non-connectivity service. For example, the range information may be a tracking area identity (tracking area identity, TAI), a cell identity (cell ID), a GPS coordinate range, or the like.

For example, if the range information included in the second indication information is TA1 and TA2, it indicates that the second network function requests the first network function to provide terminals located in the TA1 and the TA2 to provide non-connectivity services for the traffic A. In this way, the first network function may select, from a plurality of terminals based on location information of the terminals, the terminals located in the TA1 and the TA2 as the at least one first terminal, to provide the non-connectivity services for the traffic A.

The slice information identifies information about a slice of the terminal that executes the traffic and that is capable of providing the non-connectivity service. The network information identifies information about a network of the terminal that executes the traffic and that is capable of providing the non-connectivity service, for example, single network slice selection assistance information (Single network slice selection assistance information, S-NSSAI), a closed access group (closed access group, CAG) ID, and a public land mobile network (public land mobile network, PLMN) ID.

For example, if the slice information included in the second indication information is a slice 1, it indicates that the second network function requests the first network function to provide a terminal located in the slice 1 to provide a non-connectivity service for the traffic A. In this way, the first network function may select, from one or more terminals based on slice information of each of the one or more terminals, the terminal located in the slice 1 as the at least one first terminal, to provide the non-connectivity service for the traffic A.

For example, if the network information included in the second indication information is a communication network A, it indicates that the second network function requests the first network function to provide a terminal that accesses the communication network A to provide a non-connectivity service for the traffic A. In this way, the first network function may select, from a plurality of terminals based on network information of the terminal, the terminal that accesses the communication network A as the at least one first terminal, to provide the non-connectivity service for the traffic A.

The group identifier identifies a group of the terminal that executes the traffic, that is, a group of the terminal required for executing the traffic. The domain information identifies a domain of the terminal that executes the traffic, that is, a domain of the terminal required for executing the traffic.

For example, if the group identifier included in the second indication information is a terminal group M, it indicates that the second network function requests the first network function to provide a terminal that belongs to the terminal group M to provide a non-connectivity service for the traffic A. In this way, the first network function may select, from a plurality of terminals based on a group identifier of each terminal, the terminal that belongs to the terminal group M as the at least one first terminal, to provide the non-connectivity service for the traffic A. In this case, the first network function may use all or a part of terminals in the terminal group M as the at least one first terminal. For example, the first network function may use, as the at least one first terminal, a terminal that is in the terminal group M, that is in a connected mode, and that can provide a non-connectivity service for the traffic A requested by the second network function.

For example, if the domain information included in the second indication information is a terminal domain N, it indicates that the second network function requests the first network function to provide a terminal located in the terminal domain N to provide a non-connectivity service for the traffic A. In this way, the first network function may select, from a plurality of terminals based on domain information, the terminal located in the terminal domain N as the at least one first terminal, to provide the non-connectivity service for the traffic A. In this case, the first network function may use all or a part of terminals located in the terminal domain N as the at least one first terminal. For example, the first network function may use, as the at least one first terminal, a terminal that is located in the terminal domain N, that is in a connected mode, and that can provide a non-connectivity service for the traffic A requested by the second network function.

Certainly, the second indication information may further include two or more pieces of information. For example, the second indication information includes the capability service information and the range information. For example, the capability service information is a sensing capability identifier, and the range information is TA1. If the first network function determines, based on the capability service information of the terminal, that a terminal 4, a terminal 5, and a terminal 6 have a sensing capability, but the terminal 4 and the terminal 5 are located in the TA1, the first network function may determine the terminal 4 and the terminal 5 as the at least one first terminal, to provide non-connectivity ranges for traffic B. It may be understood that more information included in the second indication information indicates a more accurate determined terminal.

Step 302: The first network function determines the at least one first terminal based on the first message.

For example, the at least one first terminal is configured to provide a non-connectivity service corresponding to the traffic requested by the second network function.

The at least one first terminal is any one or more of the terminals shown in FIG. 1. There may be one or more first terminals that provide the non-connectivity service for the traffic requested by the second network function.

For example, the first network function receives information of 10 terminals, including capability information of each terminal, an identifier of each terminal, and a location of each terminal. When the second network function requests to execute the traffic B, the first network function selects, from the 10 terminals based on the traffic B and the information of each terminal, a terminal (for example, three terminals) that can provide a non-connectivity service as the first terminal.

It should be noted that a quantity of terminals required for executing the traffic may be equal to or not equal to a quantity of first terminals selected by the first network function.

In a possible implementation, step 302 may be implemented in the following manner.

For example, the first message includes a request message, and the request message is used to request the first network function to select, based on the traffic indicated by the first indication information, the terminal that can provide the non-connectivity service for the traffic. The first network function determines, based on the first indication information, the traffic that needs to be executed, selects, based on the traffic and the information about the terminal in the first network function, the terminal that can provide the non-connectivity service for the traffic, and uses the selected terminal as the first terminal.

Optionally, the first network function may further determine the at least one first terminal by determining a status of the terminal that can provide the non-connectivity service for the traffic.

In a possible implementation, the first network function may further directly select, based on the second indication information, the terminal that can provide the non-connectivity service for the traffic.

For example, when the first message includes the second indication information, where the second indication information includes an identifier of the terminal required by the traffic, the first network function may directly select the terminal based on the identifier of the terminal required by the traffic, and determine, by determining a status of the terminal, whether the terminal can serve as the first terminal to provide the non-connectivity service for the traffic requested by the second network function.

For example, the first network function determines whether the terminal required by the traffic is currently in a connected mode. For example, if the terminal is currently in an idle mode, the first network function may perform a paging procedure to enable the terminal to enter the connected mode.

For example, the first network function determines whether traffic currently executed by the terminal required by the traffic is in a saturated state. For example, the first network function may determine whether a capability load of the terminal exceeds a threshold. The threshold may be reported by the terminal with the capability indication information or configured by the second network function. The terminal periodically reports a current status to the first network function.

It may be understood that the first network function may query, based on maintained information, whether the traffic currently executed by the terminal required by the traffic is in the saturated state, and select the first terminal based on a query result. For example, the first network function obtains status information from the terminal, and the terminal reports the current status to the first network function; or the first network function sends status reporting indication information to the terminal, and the terminal reports the current status to the first network function based on the status reporting indication information; or the first network function performs querying based on another network function, where the terminal reports the current status to the another network function for maintenance.

It should be noted that, when the first message does not include the second indication information, the first network function selects, for the traffic indicated by the first message and based on the first message and with reference to information about the plurality of terminals received by the first network function, the terminal that can provide the non-connectivity service for the traffic from the plurality of terminals.

Optionally, after determining the terminal that can provide the non-connectivity service for the traffic, the first network function determines a status of the terminal that can provide the non-connectivity service for the traffic. A specific process of determining the status of the terminal that can provide the non-connectivity service for the traffic is the same as that in the foregoing embodiment, and is not described herein again.

Step 303: The first network function sends information about the at least one first terminal or a request acknowledgment result of the first message to the second network function. Correspondingly, the second network function receives the information about the at least one first terminal or the request acknowledgment result of the first message from the first network function.

In an example, the information about the first terminal includes one or more of capability information of the first terminal, an identifier of the first terminal, or a location of the first terminal. For specific content of the information about the terminal in this embodiment of this application, refer to the content of the information about the first terminal. Details are not described below again.

For example, the identifier of the terminal identifies the first terminal. For example, the identifier may be address information of the first terminal, including an IP address and a media access control (media access control, MAC) address; or may be a subscription permanent identifier (subscription permanent identifier, SUPI), an international mobile subscriber identity (international mobile subscriber identity, IMSI), a globally unique temporary identifier (globally unique temporary identity, GUTI), or the like of the first terminal. This is not limited in embodiments of this application.

The first network function sends, to the second network function, information about all first terminals selected by the first network function.

In a possible implementation, the first network function determines that a quantity of first terminals is equal to a quantity of first terminals required by the traffic. In this case, the information about the first terminal recorded in the second network function includes the identifier of the first terminal and/or the location of the first terminal.

For example, the second network function requests to execute the traffic B, and three terminals need to provide non-connectivity services. If the first network function selects three terminals (a terminal A, a terminal B, and a terminal C) that can provide non-connectivity services for the traffic B as first terminals, the first network function sends information about the three first terminals to the second network function. The first network function and/or the second network function may record the information about the three first terminals, to determine that the terminal A, the terminal B, and the terminal C provide the non-connectivity services for the traffic B.

In another possible implementation, a quantity of first terminals that are selected by the first network function and that can provide the non-connectivity services for the traffic is not equal to a quantity of terminals required by the traffic.

For example, the quantity of first terminals that are selected by the first network function and that can provide the non-connectivity services for the traffic is greater than the quantity of first terminals required by the traffic. In this case, the second network function selects, from the plurality of first terminals, the first terminal that provides the non-connectivity service for the traffic.

For example, the second network function requests to execute the traffic B, and three first terminals need to provide non-connectivity services. If the first network function selects five terminals (a terminal 1, a terminal 2, a terminal 3, a terminal 4, and a terminal 5) that can provide non-connectivity services for the traffic B as first terminals, the first network function sends information about the terminal 1 to the terminal 5 to the second network function. The second network function selects, based on the information about the terminal 1 to the terminal 5, three first terminals (for example, the terminal 2, the terminal 3, and the terminal 4) from the terminal 1 to the terminal 5 as the terminals that provide non-connectivity services.

It should be noted that a rule in which the second network function selects, from the plurality of first terminals, the first terminal to provide the non-connectivity service may be determined based on location information, status information, and the like of the terminal.

For example, five first terminals that can provide non-connectivity services for the traffic B are a terminal 1, a terminal 2, a terminal 3, a terminal 4, and a terminal 5. It is known that locations of the terminal 1 and the terminal 5 are farther away from the second network function than locations of the terminal 2, the terminal 3, and the terminal 4. In this case, the first network function preferentially selects the terminal 2, the terminal 3, and the terminal 4 to provide non-connectivity services for the traffic B.

For example, five first terminals that can provide non-connectivity services for the traffic B are a terminal 1, a terminal 2, a terminal 3, a terminal 4, and a terminal 5. It is known that a load of the terminal 2 and a load of the terminal 3 exceed a threshold. In this case, the first network function preferentially selects the terminal 1, the terminal 4, and the terminal 5 to provide non-connectivity services for the traffic B.

For example, the quantity of first terminals that are selected by the first network function and that can provide the non-connectivity services for the traffic is less than the quantity of first terminals required by the traffic. In this case, the second network function sends the first message to another first network function, to request to determine the terminal that executes the traffic or the second network function changes the quantity of terminals required by the traffic.

For example, four first terminals need to provide non-connectivity services to execute the traffic B, and the first network function selects only two terminals that can provide non-connectivity services for the traffic B as first terminals. In this case, after the first network function sends the two first terminals to the second network function, the second network function continues to send the first message to the another first network function.

For example, three first terminals need to provide non-connectivity services to execute the traffic B, and the first network function selects only two terminals that can provide non-connectivity services for the traffic B as first terminals. In this case, after the first network function sends the two first terminals to the second network function, the second network function adjusts the quantity of terminals required by the traffic to 2.

In a possible implementation of this application, the first message obtained by the first network function includes the information about the terminal required by the traffic, for example, the second indication information. In this case, after selecting the first terminal based on the information about the terminal required by the traffic, the first network function sends the request acknowledgment result of the first message to the second network function, to indicate that the first network function confirms that a terminal corresponding to the information about the terminal required by the traffic sent by the second network function is the at least one first terminal.

Step 304: The second network function sends configuration information of the traffic to the first network function, and/or the at least one first terminal, and/or an access network device associated with the at least one first terminal. The configuration information includes the information about the at least one first terminal, and the at least one first terminal is configured to execute the traffic Correspondingly, the first network function, and/or the at least one first terminal, and/or the access network device associated with the at least one first terminal receive/receives the configuration information of the traffic from the second network function.

Optionally, in step 305, after the first network function, and/or the at least one first terminal, and/or the access network device associated with the at least one first terminal receive/receives the configuration information, the at least one first terminal provides the non-connectivity service for the traffic.

For example, the first network function obtains the information about the at least one first terminal configured to execute the traffic, and the first network function determines that the at least one first terminal provides the non-connectivity service for the traffic, and requests the at least one first terminal to provide the non-connectivity service for the traffic.

For example, if the at least one first terminal obtains the information about the at least one first terminal configured to execute the traffic, the at least one first terminal provides the non-connectivity service for the traffic.

For example, the access network device (for example, a base station) associated with the at least one first terminal obtains the information about the at least one first terminal configured to execute the traffic, and the access network device determines that the at least one first terminal provides the non-connectivity service for the traffic, and requests the at least one first terminal to provide the non-connectivity service for the traffic.

Optionally, the configuration information may further carry a reporting trigger condition, for example, the second network function periodically reports an execution status of the traffic, a location of the at least one first terminal, and a battery level of the at least one first terminal.

An embodiment of this application provides a resource management method. In the method, a first network function receives a first message from a second network function, to request the first network function to determine a terminal that executes traffic. The first message includes first indication information indicating the traffic that the second network function requests to execute. The first network function determines at least one first terminal based on the first message, where the at least one first terminal is configured to provide a non-connectivity service corresponding to the traffic. The first network function sends information about the at least one first terminal or a request acknowledgment result of the first message to the second network function, so that the second network function provides the non-connectivity service for the traffic via the first terminal. In the non-connectivity service, the terminal may also serve as a service provider. Therefore, in this application, the first network function manages and invokes the terminal, and maintains a relationship between the terminal and the second network function, so that the terminal can also provide the non-connectivity service for the traffic of the second network function.

In a possible embodiment, before the first network function sends the information about the at least one first terminal or the request acknowledgment result of the first message to the second network function, the method provided in this embodiment of this application further includes: The first network function creates traffic context for the traffic. The traffic context includes the information about the at least one first terminal and information about the second network function.

In step 301, when the first message sent by the first network function to the second network function is an initial message, if the first network function does not have the traffic context corresponding to the traffic, the first network function creates the traffic context for the traffic.

The traffic context is shown in Table 1, and includes a context identifier, information about the second network function (for example, a task anchor identifier or address), traffic identifier, information about a terminal that serves a current traffic, a terminal identifier, and connection information of each terminal.

**Table 1**

| Traffic context in a first network function | |
|---|---|
| Context ID | Context identifier |
| TA info. | Task anchor identifier or address |
| Service ID | Traffic identifier |
| UE ID list | Information about a terminal that serves a current task |
| UE ID | Terminal identifier |
| Connection info. | Connection information of each terminal |

In this embodiment of this application, the connection information may identify information related to a connection between a current terminal and a network. For example, information about a control plane function connected to the terminal is, for example, mobility management function information (for example, an AMF ID) and management function information (for example, an SMF ID) of a session connected to the terminal. The connection information may also be information related to a session used by the terminal to execute a current traffic, for example, a session identifier (session ID), a session type (session type) (for example, an IP session or a non-IP session), and an access technology type (for example, 3GPP access, non-3GPP access, relay access, or satellite access).

In a possible embodiment, after the first network function sends the information about the at least one first terminal or the request acknowledgment result of the first message to the second network function, the method provided in this embodiment of this application may further include: The first network function re-determines at least one second terminal for the traffic when a part or all of the at least one first terminal is not capable of executing the traffic.

When the part or all of the at least one first terminal is not capable of executing the traffic, a status (for example, a battery level or a location) of the terminal cannot continue to provide the non-connectivity service for the traffic, or an execution manner (for example, quality of service of the traffic) of the traffic changes, and consequently the at least one first terminal cannot provide the non-connectivity service for the traffic.

For example, three first terminals (a terminal 1, a terminal 2, and a terminal 3) provide non-connectivity services for the traffic A. In the three first terminals, a battery level of the terminal 1 is insufficient. In this case, the first network function reselects a first terminal (a terminal 4) that can provide a non-connectivity service for the traffic A to replace the terminal 1. In this case, the terminal 2, the terminal 3, and the terminal 4 are three second terminals re-determined by the first network function.

For example, three first terminals (a terminal 1, a terminal 2, and a terminal 3) provide non-connectivity services for the traffic A. In the three first terminals, locations of the terminal 1, the terminal 2, and the terminal 3 all change, and the three first terminals cannot provide the non-connectivity services for the traffic A. In this case, the first network function reselects three first terminals (a terminal 4, a terminal 5, and a terminal 6) that can provide non-connectivity services for the traffic A to replace the terminal 1, the terminal 2, and the terminal 3. In this case, the terminal 4, the terminal 5, and the terminal 6 are three second terminals re-determined by the first network function.

When the execution manner (for example, the quality of service of the traffic) of the traffic changes, a quantity of first terminals required by a current traffic may be further increased or reduced.

For example, three first terminals (a terminal 1, a terminal 2, and a terminal 3) provide non-connectivity services for the traffic A. When an execution manner of the traffic changes from an execution manner 1 to an execution manner 2, three first terminals need to provide non-connectivity services in the execution manner 1, and two first terminals need to provide non-connectivity services in the execution manner 2. In this case, the first network function reduces the quantity of first terminals from 3 to 2. For example, the terminal 1 and the terminal 2 are selected as first terminals to continue to provide non-connectivity services for the traffic A. In this case, the terminal 1 and the terminal 2 are two second terminals re-determined by the first network function.

For example, three first terminals (a terminal 1, a terminal 2, and a terminal 3) provide non-connectivity services for the traffic A. When an execution manner of the traffic changes from an execution manner 1 to an execution manner 3, three first terminals need to provide non-connectivity services in the execution manner 1, and four first terminals need to provide non-connectivity services in the execution manner 3. In this case, the first network function increases the quantity of first terminals from 3 to 4, and the first network function selects a terminal 4 as one added first terminal. In this case, the terminal 1, the terminal 2, the terminal 3, and the terminal 4 are four second terminals re-determined by the first network function.

In a possible embodiment, after the first network function re-determines the at least one second terminal for the traffic when determining that the part or all of the at least one first terminal is not capable of executing the traffic, the method provided in this embodiment of this application may further include: The first terminal updates the information about the at least one first terminal in the traffic context of the traffic.

For example, three first terminals (a terminal 1, a terminal 2, and a terminal 3) provide non-connectivity services for the traffic A. When locations of the terminal 1, the terminal 2, and the terminal 3 all change, and the three first terminals cannot provide the non-connectivity services for the traffic A, the first network function reselects three second terminals (a terminal 4, a terminal 5, and a terminal 6) to provide non-connectivity services for the traffic. The first network function updates information (information about the terminal 1, information about the terminal 2, and information about the terminal 3) about the first terminal in the traffic context to information about the second terminal (information about the terminal 4, information about the terminal 5, and information about the terminal 6).

For example, when the execution manner of the traffic is changed from an execution manner 1 to an execution manner 2, three first terminals (a terminal 1, a terminal 2, and a terminal 3) need to provide non-connectivity services in the execution manner 1, and two first terminals (the terminal 1 and the terminal 2 are used as an example) need to provide non-connectivity services in the execution manner 2, the first network function updates information (information about the terminal 1, information about the terminal 2, and information about the terminal 3) of the first terminal in the traffic context to information about the second terminal (the information about the terminal 1 and the information about the terminal 2).

In a possible embodiment, before the first network function receives the first message from the second network function, the method provided in this embodiment of this application may further include: The first network function obtains, from a third network function, subscription information or policy information corresponding to the traffic and/or the first terminal.

The subscription information is used by an operator and a user to confirm that the terminal can use a specific network service of the operator and details of the service, for example, quality of service (quality of service, QoS), bandwidth, traffic, and duration of a connection. The subscription information may be further used to record a capability service that the terminal can be authorized to use, for example, a vehicle to everything (vehicle to everything, V2X) communication capability, a relay capability, a satellite access capability, a non-3GPP network access capability, and whether a relay service can be used of the terminal in the 5G network architecture.

The policy information is service execution information that can be controlled by the operator. For example, in some areas, the operator may specify whether the terminal can use a part of services and a specific parameter of the service.

In an example, the third network function is a UDM network element or a PCF network element, and the first network function obtains, from the UDM network element or the PCF network element, the subscription information or the policy information corresponding to the traffic and/or the first terminal. After recording the capability of the terminal, the first network function facilitates subsequent invoking of the terminal based on the subscription information and the policy information. In a future network architecture (for example, 6G), the third network function may alternatively be another network element, another name of the UDM network element, or another name of the PCF network element. This is not limited in this application.

In a possible embodiment, after the first network function receives the first message from the second network function, the method provided in this embodiment of this application may further include: The first network function sends a second message to the at least one first terminal, where the second message is used to request to execute the traffic. The first network function receives a third message from the at least one first terminal. The third message is used to determine that the at least one first terminal can execute the traffic.

For example, the first network function sends a request message to the at least one first terminal, to request the at least one first terminal to execute the traffic. After receiving the request message, the at least one first terminal sends acknowledgment information to the first network function, to confirm that the at least one first terminal can execute the traffic.

When the at least one first terminal is in an idle mode, that is, in a non-connected mode, the second message may be a paging message, and the paging message carries information used to request the at least one first terminal to serve as an execution node to execute the traffic. The third message may be a feedback to the second message. For example, the third message carries indication information indicating whether to participate in executing the traffic, or is fed back in a form of traffic execution request message.

In an example, when the at least one first terminal is in the idle mode, the first network function sends the paging message (the second message) to the at least one first terminal. After the at least one first terminal receives the paging message, the at least one first terminal enters a connected mode from the idle mode, and sends, to the first network function, the third message carrying the indication information indicating to participate in executing the traffic, or sends, to the first network function, the third message carrying the request message for participating in executing the traffic.

In a possible embodiment, after the first network function receives the third message from the first terminal, the method provided in this embodiment of this application further includes: The first network function updates the information about the at least one first terminal in the traffic context.

Content in the traffic context is the same as that in the foregoing embodiment. Details are not described herein again.

In a possible embodiment, after the first network function receives the third message from the first terminal, the method provided in this embodiment of this application further includes: The first network function updates a user context of the at least one first terminal. The user context is used to record capability information of the at least one first terminal, information corresponding to each traffic context, and the information about the second network function (for example, the task anchor identifier or address).

The capability information of the at least one first terminal indicates a capability of the terminal, the information corresponding to each traffic context indicates traffic context corresponding to the traffic, and the information about the second network function indicates an address or an identifier of the second network function.

In an example, the user context is shown in Table 2. The user context further includes an interface type (access type), to indicate an interface type of the traffic executed by the at least one first terminal.

Optionally, the user context further includes a group identifier of the at least one first terminal and a session identifier of a task.

**Table 2**

| User context in a first network function | |
|---|---|
| UE capability | Capability information of at least one first terminal |
| For each service level context | Information about each traffic context |
| TA information | Task anchor identifier or address |
| Service ID/context ID | Traffic identifier or traffic context identifier |
| TE group ID | Group identifier of at least one first terminal |
| Session ID | Session identifier of a task |
| Access type | Interface type |

In a possible embodiment, after the first network function receives the first message from the second network function, the method provided in this embodiment of this application may further include: The first network function allocates a temporary identifier to the at least one first terminal. The first network function sends the temporary identifier to the second network function.

The temporary identifier is an identifier allocated by the first network function to the at least one first terminal. It may be understood that when the at least one first terminal changes to the at least one second terminal due to traffic change, an identifier of the at least one second terminal is still a temporary identifier.

For example, the first network function determines three first terminals (a terminal 1, a terminal 2, and a terminal 3), and allocates a temporary identifier A1, a temporary identifier B1, and a temporary identifier C1 to the three first terminals, respectively. When an execution manner in which the three first terminals need to provide non-connectivity services for the traffic A is changed from an execution manner 1 to an execution manner 2, if two first terminals need to provide non-connectivity services for the traffic A, the first network function may use a terminal 2 and a terminal 3 as the two second terminals, and allocate temporary identifiers to the two second terminals, where the temporary identifiers are a temporary identifier A2 and a temporary identifier B2. Alternatively, the temporary identifier B1 and the temporary identifier C1 are still used as temporary identifiers of the terminal 2 and the terminal 3, respectively.

In a possible embodiment, after the first network function allocates the temporary identifier to the at least one first terminal, the method provided in this embodiment of this application further includes: The first network function updates the information about the at least one first terminal in the traffic context, so that an updated traffic context includes the temporary identifier of the at least one first terminal. Certainly, in addition to the temporary identifier, the updated traffic context may further include the identifier of the first terminal or may not include the identifier of the first terminal. This is not limited in embodiments of this application.

For example, the first network function allocates a temporary identifier 1 to one first terminal, and the first network function updates the identifier of the at least one first terminal in the traffic context. In addition, the first network function adds the temporary identifier 1 to the traffic context. For example, the traffic context is shown in Table 3.

**Table 3**

| User context in a first network function | |
|---|---|
| Context ID | Context identifier |
| TA info. | Task anchor identifier or address |
| Service ID | Traffic identifier |
| TE configuration parameter | First terminal configuration parameter |
| UE ID list | Information about a terminal that serves a current task |
| AMF/SMF info. | Information about a connection function connected to a first terminal |
| UE ID/TE ID | Identifier or temporary identifier of the first terminal |

In a possible embodiment, when the first network function allocates the temporary identifier to the at least one first terminal, after the first network function sends the information about the at least one first terminal or the request acknowledgment result of the first message to the second network function, the method provided in this embodiment of this application further includes: The first network function obtains configuration information of the traffic from the second network function.

The configuration information includes the information about the at least one first terminal. The first network function sends the configuration information to the at least one first terminal or an access network device associated with the at least one first terminal.

In a possible embodiment, the method provided in this embodiment of this application may further include: The first network function obtains information about one or more terminals.

The information about the one or more terminals includes information about each terminal. The one or more terminals include the at least one first terminal.

For example, the first network function may obtain the information about the one or more terminals before step 301. Certainly, the first network function may alternatively perform, after step 301, the step of obtaining the information about the one or more terminals.

Because the first network function in this embodiment of this application may be integrated into a network element (for example, a connection-related network function or a binding support function) in a core network, or may be independently deployed, the following separately describes manners of obtaining the information about the one or more terminals by the first network function in different cases.

For example, in a possible embodiment, the connection-related network function is an access and mobility management function AMF network element and/or a session management function SMF network element.
(1) An example in which the first network function is integrated into the connection-related network function, for example, the AMF network element or the SMF network element is used.
   For example, the information about the terminal sent by the terminal to the first network function may be a message, for example, a registration message, a service request message, or a session establishment request message sent by the terminal to the AMF network element or the SMF network element, where the message carries the information about the terminal and/or the capability information of the terminal, for example, a sensing capability, a computation capability, or a data processing capability.
(2) An example in which the first network function is independently deployed is used.

In a possible implementation, that the first network function obtains the information about the one or more terminals includes: The first network function obtains the information about the one or more of the terminals from the connection-related network function.

In an example, the first network function may send a request message to the connection-related network function, to request the connection-related network function to provide the information about the one or more terminals. Certainly, the connection-related network function may also actively send the information about the one or more terminals to the first network function.

It may be understood that when the first network function may send the request message to the connection-related network function, to request the connection-related network function to provide the information about the one or more terminals, the request message may further carry indication information, to indicate information about that the first network function needs to provide a terminal that meets a condition.

In an example, the first network function sends a fourth message to the connection-related network function. The fourth message is used to request the connection-related network function to send, to the terminal, a message used to request to execute the traffic. After obtaining the message used to request to execute the traffic, the terminal sends the information about the one or more terminals to the connection-related network function. The connection-related network function determines the at least one first terminal based on the message used to request to execute the traffic and the information about the one or more terminals, and sends a fifth message to the first network function, where the fifth message is used to determine that the at least one first terminal executes the traffic.

It should be noted that, because the first network function is independently deployed, the user context is maintained by the connection-related network function, and the traffic context is maintained by the first network function. Information about the first network function and information about the connection-related network function are correspondingly added to the user context and the traffic context.

For example, content of the user context is shown in Table 4, and includes capability information of the terminal, information about a corresponding traffic context, information about the second network function (for example, a task anchor identifier or address), and information about the first network function (for example, an identifier or an address of the first network function).

**Table 4**

| User context in a connection-related network function | |
|---|---|
| UE capability | Capability information of a terminal |
| For each service level context | Information about each traffic context |
| TA information | Task anchor identifier or address |
| URMF information | Identifier or address of a first network function |

(3) An example in which the first network function is integrated into the binding support function is used.

In a possible implementation, the first network function is integrated into the binding support function, and that the first network function obtains the information about the one or more terminals includes: The first network function obtains the information about the one or more terminals from a policy control function.

For example, the policy control function registers binding information between the terminal and the policy control function with the binding support function, where the binding information may carry the information about the terminal.

Optionally, the binding information may further carry information about the traffic for which the terminal provides the non-connectivity service.

In a possible embodiment, in the method provided in this embodiment of this application, the second network function may further obtain a service request, and generate the first indication information based on the service request.

The service request may be from another terminal, a management and operation and maintenance system of an operator, a third-party application server, another network function in a network, or the like.

In a possible embodiment, when the first network function is independently deployed, the method provided in this embodiment of this application further includes: The second network function sends a sixth message to the first network function. The sixth message is used to request the first network function to send, to the connection-related network function, information used to request to execute the traffic. In this case, the first network function requests, based on the sixth message, the connection-related network function to provide, to the first network function, the information about the one or more terminals that can provide non-connectivity services for the traffic. Then, the second network function obtains, from the first network function, information about executing the traffic by the at least one first terminal.

In a possible embodiment, when the first network function is integrated into the binding support function, the binding support function is connected to the policy control function, and the policy control function is connected to the connection-related network function, the method provided in this embodiment of this application further includes: The second network function sends a seventh message to the policy control function. The seventh message is used to request the policy control function to send, to the connection-related network function, information used to request to execute the traffic. Then, the policy control function obtains, from the connection-related network function, the information about the one or more terminals that can provide the non-connectivity services for the traffic, and then the policy control function provides, to the first network function, the information about the one or more terminals that can provide the non-connectivity services for the traffic. The first network function determines the information about the at least one first terminal based on the information used to request to execute the traffic and the information about the one or more terminals, and sends the information about the at least one first terminal to the second network function, and therefore the second network function obtains the information about the at least one first terminal from the first network function.

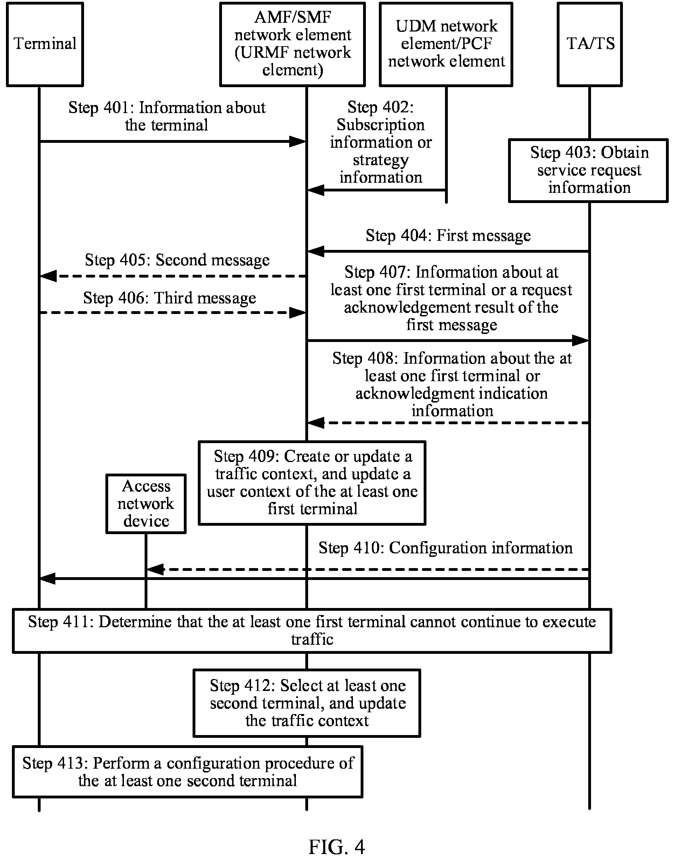

An example in which the first network function is the resource management function (URMF) network element 200, the second network function is the task anchor (task anchor, TA) or the task scheduler (task scheduler, TS) in the control and management function network element 100, and the connection-related network function is the AMF network element/SMF network element is used below to describe a process in which the TA/TS requests the at least one first terminal from the URMF network element 200 to execute the traffic when the URMF network element is integrated in the AMF network element/SMF network element. This process is specifically shown in FIG. 4.

The URMF network element may be integrated into a core network element in a 5G network, for example, the AMF network element/SMF network element. Therefore, an action performed by the AMF network element/SMF network element may also be considered as an action performed by the URMF. The following embodiments are described by using the AMF network element/SMF network element as an execution body.

In an embodiment of this application, FIG. 4 is a schematic flowchart of a resource management method according to an embodiment of this application. The method includes the following steps.

Step 401: One or more terminals send information about the one or more terminals to an AMF network element/SMF network element. Correspondingly, the AMF network element/SMF network element receives the information from the one or more terminals.

A URMF network element is deployed in the AMF network element/SMF network element. In other words, one or more terminals send information about the terminal to the URMF network element. Correspondingly, the URMF network element receives the information from the one or more terminals.

It may be understood that in this embodiment of this application, because the URMF network element is deployed in the AMF network element/SMF network element, the URMF network element also obtains or sends same information in a process in which the AMF network element/SMF network element obtains or sends the information.

For example, the one or more terminals may send a registration message, a service request message, a session establishment request message, and the like to the AMF network element/SMF network element. The registration message, the service request message, and the session establishment request message may carry capability information of the terminal to execute traffic.

Step 402: The AMF network element/SMF network element obtains, from a UDM network element/PCF network element, subscription information or policy information corresponding to the traffic and/or a first terminal. Correspondingly, the UDM network element/PCF network element sends, to the AMF network element/SMF network element, the subscription information and/or the policy information corresponding to the traffic and/or the first terminal.

The first terminal is a terminal that provides a non-connectivity service for traffic that needs to be executed by a TA/TS. For the subscription information and the policy information, refer to the foregoing embodiment. Details are not described herein again.

For example, after obtaining the subscription information and/or the policy information, the AMF network element/SMF network element records the capability information of the terminal, to facilitate subsequent invoking of the terminal. In addition to being recorded in a user context, the capability information of the terminal may be recorded in a context related to the terminal, for example, a mobility management context, a session context, and a capability context. This is not limited in embodiments of this application.

For example, the AMF network element/SMF network element maintains a capability context, and the capability context records the capability information of the terminal, for example, an identifier of a terminal that supports a capability and a location of the terminal.

Step 403: The TA/TS obtains service request information.

The service request information may be obtained from another terminal, a management and operation and maintenance system of an operator, a third-party application server, or another network function network element in a network.

For example, the TA/TS may obtain the service request information from a network function or an access network device in a same public land mobile network, or may obtain the service request information from network functions or access network devices in different public land mobile networks.

Correspondingly, the another terminal, or the management and operation and maintenance system of the operator, or the third-party application server, or the another network function network element in the network sends the service request information to the TA/TS.

Step 404: The TA/TS sends a first message to the AMF network element/SMF network element. Correspondingly, the AMF network element/SMF network element obtains the first message from the TA/TS.

The first message is used to request a first network function to determine the terminal that executes the traffic. The first message includes first indication information, the first indication information indicates traffic that a second network function requests to execute.

For example, the first message carries traffic identifier, and the traffic identifier identifies traffic that the TA/TS requests to execute. For different service types, traffic identifiers are different. For example, the traffic identifier is a task ID, a sensing ID, or a computation ID.

For example, the first message further carries traffic context identification information corresponding to the traffic. When the first message is not a 1^{st} message, traffic context already exists in the AMF network element/SMF network element, and the traffic context identification information indicates the traffic context.

For example, when the first message is an initial message, that is, a 1^{st} message, and the AMF network element/SMF network element has not established traffic context, the traffic context identification information indicates to create the traffic context.

Optionally, the first message may further carry second indication information, and the second indication information identifies the terminal requested by the traffic.

For example, the second indication information may include at least one of the following information: capability service information, range information, slice information, network information, a closed access group, a public land mobile network identifier, a group identifier of the first terminal, an identifier of the first terminal, and the like. For a specific example, refer to the foregoing embodiment. Details are not described herein again.

In an example, if the first message is an initial message, the AMF network element/SMF network element may create a context for the traffic based on the first message, and select, for the TA/TS based on the first message, the terminal that can provide the non-connectivity service.

Optionally, the AMF network element/SMF network element may not create the traffic context. When the first message does not carry related information of the first terminal, the AMF network element/SMF network element selects, based on the information of the terminal obtained in step 401 and the first message, the terminal that can provide the non-connectivity service for the traffic. When the first message carries related information of the first terminal, the AMF network element/SMF network element determines the first terminal based on the related information of the first terminal, and determines whether a status of the first terminal can provide the non-connectivity service for the traffic. For example, the status of the first terminal may be a connected status, including an idle mode, a radio resource control (radio resource control, RRC) inactive mode, and a connected mode; or may be a load status, including a saturated state, an unsaturated state, a percentage of a current load, or the like.

Step 405: The AMF network element/SMF network element sends a second message to the at least one first terminal. Correspondingly, the at least one first terminal obtains the second message from the AMF network element/SMF network element. The second message is traffic execution request message, and is used to request to execute the traffic.

For example, the AMF network element/SMF network element sends a non-access stratum (non-access stratum, NAS) message to the at least one first terminal, to initiate traffic execution request.

For example, the SMF network element invokes a message transmission service of the AMF network element, to send a session-related control instruction to the at least one first terminal, to initiate the traffic execution request.

For another example, when the AMF network element/SMF network element is replaced with the access network device, the traffic execution request message may be a radio resource management (radio resource control, RRC) message.

In a possible implementation, when the at least one first terminal is in a non-connected mode, the traffic execution request message may be a paging message, and the paging message carries information used to request the at least one first terminal to serve as an execution node to execute the traffic, so as to initiate the traffic execution request.

Step 406: The at least one first terminal sends a third message to the AMF network element/SMF network element. Correspondingly, the AMF network element/SMF network element obtains the third message from the at least one first terminal. The third message is a feedback of the traffic execution request message, and is used to determine that the at least one first terminal executes the traffic.

For example, the third message carries indication information indicating whether to participate in executing the traffic.

For example, when the third message carries the indication information indicating to participate in executing the traffic, the AMF network element/SMF network element determines that the at least one first terminal executes the traffic. When the third message carries the indication information indicating not to participate in executing the traffic, the AMF network element/SMF network element re-determines the at least one first terminal.

For example, the third message is used as a reply in a form of the traffic execution request message.

In an example, when the at least one first terminal is in an idle mode and receives a paging message, the at least one first terminal changes from the idle mode to a connected mode, and sends the traffic execution request message to the AMF network element/SMF network element, where the traffic execution request message carries indication information indicating whether to participate in executing the traffic, or the at least one first terminal sends, to the AMF network element/SMF network element, a request message for participating in executing the traffic.

It should be noted that step 405 and step 406 may be performed after step 408 in this embodiment of this application. This is not limited in embodiments of this application.

Step 407: The AMF network element/SMF network element sends information about the at least one first terminal or a request acknowledgment result of the first message to the TA/TS. Correspondingly, the TA/TS obtains the information about the at least one first terminal or the request acknowledgment result of the first message from the AMF network element/SMF network element.

The information about the first terminal may include an identifier of the first terminal, an address of the first terminal, a list of the first terminal, a protocol data unit session identifier (protocol data unit session identifier, PDU Session ID), and the like.

When the AMF network element/SMF network element sends the information about the at least one first terminal to the TA/TS, a quantity of first terminals selected by the AMF network element/SMF network element may be equal to or unequal to a quantity of terminals requested by traffic of the TA/TS.

For example, the quantity of first terminals selected by the AMF network element/SMF network element is equal to the quantity of terminals requested by the traffic of the TA/TS. In this case, the TA/TS records the information about the first terminal. Specifically, the TA/TS may create the traffic context, and the traffic context includes the information about the first terminal.

For example, the quantity of first terminals selected by the AMF network element/SMF network element is greater than the quantity of terminals requested by the traffic of the TA/TS, and the TA/TS may select, from a plurality of first terminals, the first terminal that provides the non-connectivity service for the traffic. A condition of selection may be based on a current load status of the first terminal.

Specifically, the TA/TS may directly obtain status information of the terminal from the terminal, for example, a load status, or may obtain status information of the terminal from another network function. This is not limited herein.

For example, the quantity of first terminals selected by the AMF network element/SMF network element is less than the quantity of terminals requested by the traffic of the TA/TS, and the TA/TS sends the first message to another AMF network element/SMF network element, to obtain information about a terminal that can provide a non-connectivity service for the traffic and that is in the another AMF network element/SMF network element. Alternatively, the TA/TS changes the quantity of terminals required by the traffic, to meet the quantity of first terminals selected by the AMF network element/SMF network element.

For specific implementation, refer to the foregoing embodiment. Details are not described herein again.

In step 404, if the first message includes the second indication information, that is, includes the information about the at least one first terminal, the AMF network element/SMF network element needs to send only the request acknowledgment result of the first message to the TA/TS.

Step 408: The TA/TS sends, to the AMF network element/SMF network element, the information about the at least one first terminal required by the traffic, or sends acknowledgment indication information. Correspondingly, the AMF network element/SMF network element obtains, from the TA/TS, the information about the at least one first terminal required by the traffic or the acknowledgment indication information.

For example, the AMF network element/SMF network element sends, to the TA/TS, five first terminals that can provide non-connectivity services for the traffic. After obtaining the five first terminals, the TA/TS selects, based on traffic requirement, three first terminals to provide non-connectivity services for the traffic, and sends information about the three first terminals to the AMF network element/SMF network element.

For example, the AMF network element/SMF network element sends, to the TA/TS, two first terminals that can provide non-connectivity services for the traffic. After obtaining the two first terminals, the TA/TS determines that the two first terminals are configured to provide the non-connectivity services for the traffic, and sends acknowledgment indication information to the AMF network element/SMF network element.

Step 409: The AMF network element/SMF network element creates or updates the traffic context, and updates a user context of the at least one first terminal.

Refer to the embodiment in step 404. In step 404, the AMF network element/SMF network element may create the traffic context, or may not create the traffic context. When the AMF network element/SMF network element has created the traffic context, the AMF network element/SMF network element updates the traffic context, and updates the user context of the at least one first terminal. When the AMF network element/SMF network element does not create the traffic context, the AMF network element/SMF network element creates the traffic context, and updates the user context of the at least one first terminal.

For specific information about the traffic context, refer to Table 1 in the foregoing embodiment. The traffic context includes a context identifier, a task anchor identifier or address, traffic identifier, a terminal identifier, information about a terminal that serves a current task, and connection information of each terminal.

For specific information about the user context, refer to Table 2 in the foregoing embodiment. The user context includes capability information of at least one first terminal, information corresponding to each traffic context, a task anchor identifier or address, traffic identifier or traffic context identifier, a group identifier of at least one first terminal, a session identifier of a task, and an interface type.

Step 410: The TA/TS sends configuration information to the at least one first terminal or an access network device associated with the at least one first terminal. Correspondingly, the at least one first terminal or the access network device associated with the at least one first terminal obtains the configuration information from the TA/TS.

The configuration information includes the information about the first terminal selected by the TA/TS to provide the non-connectivity service for the traffic.

Optionally, the configuration information may further carry a reporting trigger condition.

For example, the TA/TS periodically reports an execution status of the traffic, a location of the first terminal, a battery level of the first terminal, and the like to the at least one first terminal.

For example, the first terminal may also report an execution status of the traffic, a location of the first terminal, a battery level of the first terminal, and the like to the access network device connected to the at least one first terminal. In this case, the TA/TS may also send the reporting trigger condition to the access network device connected to the at least one first terminal.

Optionally, the first terminal may also report an execution status of the traffic, a location of the first terminal, a battery level of the first terminal, and the like to the AMF network element/SMF network element. In this case, the TA/TS may also send the reporting trigger condition to the AMF network element/SMF network element.

Step 411: The AMF network element/SMF network element or the TA/TS determines that a part or all of the at least one first terminal cannot continue to execute the traffic.

For example, when the AMF network element/SMF network element or the TA/TS finds that the reporting trigger condition is met, the AMF network element/SMF network element receives indication information indicating to reselecting at least one first terminal to provide a non-connectivity service for the traffic.

For example, the AMF network element/SMF network element or the TA/TS determines that an execution manner of the traffic changes.

For example, the AMF network element/SMF network element or the TA/TS determines that quality of service (quality of service, QoS) of a connection of the traffic changes. In this case, a quantity of terminals that need to provide non-connectivity services for the traffic is different from a quantity of the at least one first terminal that currently provides the non-connectivity service. In other words, the quantity of the at least one first terminal that currently provides the non-connectivity service needs to be increased or decreased.

Step 412: The AMF network element/SMF network element selects at least one second terminal, and updates the traffic context.

Selecting the at least one second terminal further includes increasing the quantity of the at least one first terminal or decreasing the quantity of the at least one first terminal.

For example, when an execution manner of traffic M is changed from an execution manner 1 to an execution manner 2, one terminal (a terminal A) that has a computation capability needs to provide a non-connectivity service in the execution manner 1, and two terminals (a terminal A and a terminal B) that have a computation capability need to provide non-connectivity services in the execution manner 2. In this case, the AMF network element/SMF network element selects one first terminal (the terminal B) for the traffic M, and the terminal A and the terminal B are second terminals. The AMF network element/SMF network element updates information about the terminal A in the traffic context to information about the terminal A and the terminal B.

Step 413: The AMF network element/SMF network element performs a configuration procedure of the at least one second terminal.

For a specific configuration process, refer to step 401 to step 410. Details are not described herein again.

In some embodiments of this application, the AMF network element/SMF network element may allocate a temporary identifier to the at least one first terminal.

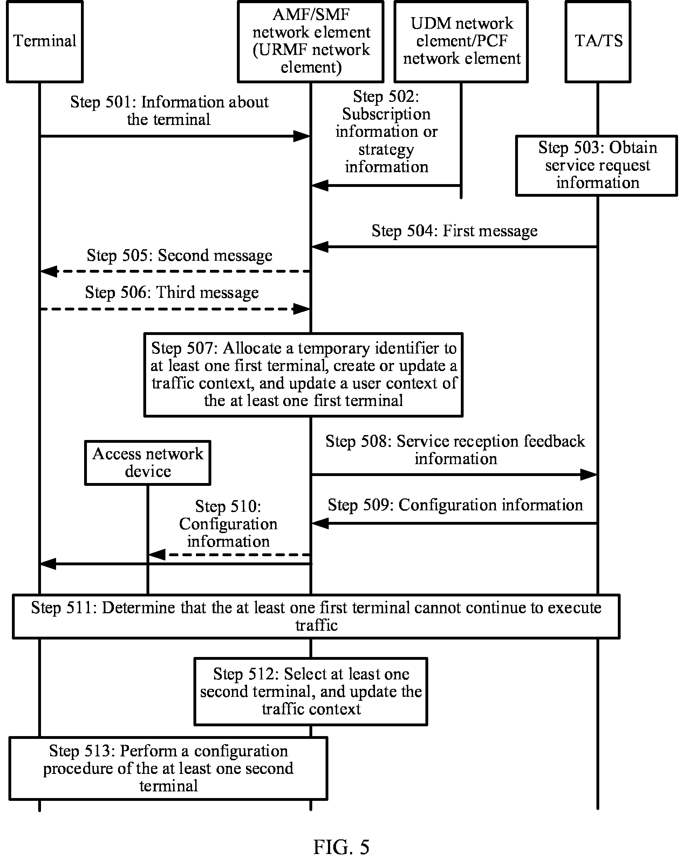

An example in which the first network function is the resource management function (URMF) network element 200, the second network function is the task anchor (task anchor, TA) or the task scheduler (task scheduler, TS) in the control and management function network element 100, and the connection-related network function is the AMF network element/SMF network element is used below to describe a process in which the TA/TS requests the at least one first terminal to execute the traffic when the URMF network element is integrated into the AMF network element/SMF network element. FIG. 5 is a schematic flowchart of another resource management method according to an embodiment of this application. A difference between the method and the embodiment shown in FIG. 4 lies in that, in the embodiment shown in FIG. 5, after an AMF network element/SMF network element receives a first message from a TA/TS, the AMF network element/SMF network element allocates a temporary identifier to at least one first terminal. The method includes the following steps.

Step 501 to step 506 are the same as step 401 to step 406 described in the foregoing embodiment. Details are not described herein again.

Step 507: The AMF network element/SMF network element allocates the temporary identifier to the at least one first terminal, creates or updates traffic context, and updates a user context of the at least one first terminal.

For example, the AMF network element/SMF network element selects three terminals, and allocates a temporary identifier 1, a temporary identifier 2, and a temporary identifier 3 to the three terminals, respectively. In the traffic context, identifiers of the three terminals are changed to three temporary identifiers (the temporary identifier 1, the temporary identifier 2, and the temporary identifier 3). Similarly, three temporary identifiers are added to the user context.

Processes of creating or updating the traffic context and updating the user context are the same as those in the foregoing embodiment. Details are not described herein again.

A configuration parameter of the at least one first terminal is further added to the traffic context, and the configuration parameter does not need to be obtained by the TA/TS.

Step 508: The AMF network element/SMF network element sends service reception feedback information to the TA/TS. Correspondingly, the TA/TS obtains the service reception feedback information from the AMF network element/SMF network element.

The service reception feedback information is information about the at least one first terminal.

For example, a quantity of the at least one first terminal selected by the AMF network element/SMF network element is equal to a quantity of terminals required for executing the traffic by the TA/TS. Therefore, only the temporary identifier of the at least one first terminal needs to be sent to the TA/TS.

Step 509: The TA/TS sends configuration information to the AMF network element/SMF network element. Correspondingly, the AMF network element/SMF network element obtains the configuration information from the TA/TS.

Step 510: The AMF network element/SMF network element sends the information about the at least one first terminal to the terminal or an access network device connected to the terminal, and sends the configuration parameter. Correspondingly, the terminal or the access network device connected to the terminal obtains the information about the at least one first terminal and the configuration parameter from the AMF network element/SMF network element.

Step 511 to step 513 are the same as step 411 to step 413 described in the foregoing embodiment. Details are not described herein again.

It should be noted that when the AMF network element/SMF network element needs at least one second terminal, the TA/TS does not need to send traffic execution information to the at least one second terminal, but the AMF network element/SMF network element automatically selects the at least one second terminal and sends the configuration parameter of the traffic to the at least one second terminal.

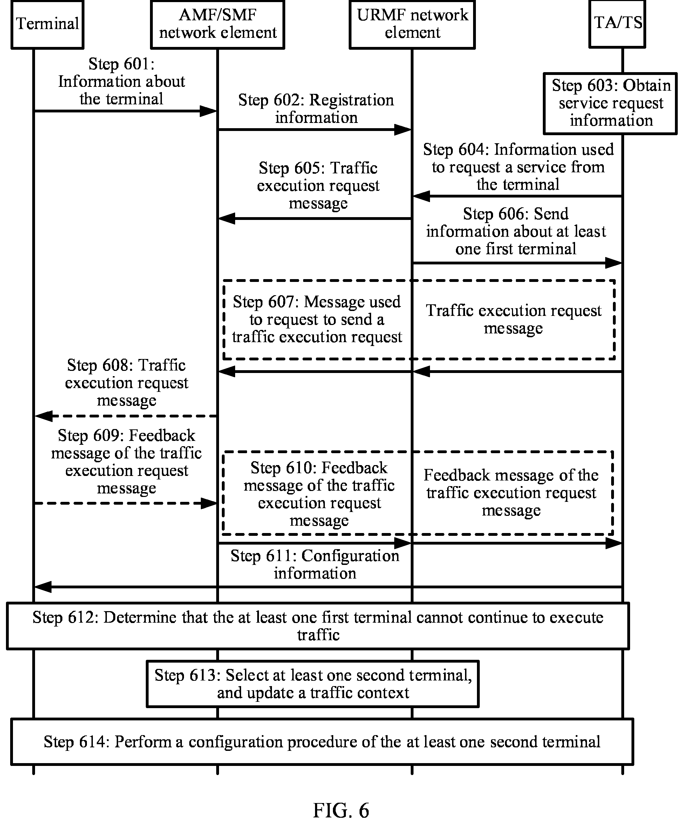

In a possible embodiment of this application, a first network function is independently deployed. An example in which the first network function is the resource management function (URMF) network element 200, the second network function is the task anchor (task anchor, TA) or the task scheduler (task scheduler, TS) in the control and management function network element 100, and the connection-related network function is the AMF network element/SMF network element is used below to describe a process in which the TA/TS requests the at least one first terminal to execute the traffic when the URMF network element is independently deployed. FIG. 6 is a schematic flowchart of a resource management method according to an embodiment of this application. A difference between the method and embodiments shown in FIG. 4 and FIG. 5 lies in that a URMF network element is independently deployed in the embodiment shown in FIG. 6. The method includes the following steps.

Step 601: One or more terminals send information about the terminal to an AMF network element/SMF network element. Correspondingly, the AMF network element/SMF network element receives the information from the one or more terminals.

Step 601 is the same as step 401 or step 501 described in the foregoing embodiment. Details are not described herein again.

Step 602: The AMF network element/SMF network element sends registration information to the URMF network element. Correspondingly, the URMF network element obtains the registration information from the AMF network element/SMF network element.

For example, the registration information includes the information about the one or more terminals, including an identifier and capability information of the one or more terminals. After receiving the registration information, the URMF network element records the information about the one or more terminals and information about the connected AMF network element/SMF network element, for example, an identifier of the AMF network element and an identifier of the SMF network element.

The AMF network element/SMF network element adds information about the URMF network element to a user context, for example, an identifier or an address of the URMF network element.

Step 603 is the same as step 403 and step 503 described in the foregoing embodiment. Details are not described herein again.

Step 604: The TA/TS sends information used to request a service from the terminal to the URMF network element. Correspondingly, the URMF network element obtains, from the TA/TS, the information used to request the service from the terminal.

Step 604 is the same as step 404 or step 504 described in the foregoing embodiment. Details are not described herein again.

Step 605: The URMF network element selects at least one first terminal based on the information about the one or more terminals, sends traffic execution request message to the AMF network element/SMF network element, and establishes traffic context.

The traffic context further includes the information about the AMF network element/SMF network element.

The traffic context may be an identifier of the at least one first terminal, or may be a temporary identifier of the at least one first terminal. This is not limited herein.

Step 606: The URMF network element sends the information about the at least one first terminal to the TA/TS. Correspondingly, the TA/TS obtains the information about the at least one first terminal from the URMF network element.

Step 607: The TA/TS sends the traffic execution request message to the URMF network element, and the URMF network element sends, to the AMF network element/SMF network element, a message used to request the AMF network element/SMF network element to send traffic execution request to the at least one first terminal. Correspondingly, the URMF network element obtains, from the TA/TS, the traffic execution request message, and the AMF network element/SMF network element obtains, from the URMF network element, the message used to request the AMF network element/SMF network element to send the traffic execution request to the at least one first terminal.

The traffic execution request message sent by the TA/TS to the URMF network element may be the same as or different from the message that is sent by the URMF network element to the AMF network element/SMF network element and that is used to request the AMF network element/SMF network element to send the traffic execution request to the at least one first terminal. In a same case, it may be understood that the URMF network element forwards only the traffic execution request message to the AMF network element/SMF network element. In different cases, the two messages may be in different forms or content. This is not limited herein.

Step 608: The AMF network element/SMF network element sends traffic execution request message to the at least one first terminal.

The traffic execution request message sent by the AMF network element/SMF network element to the at least one first terminal may be the same as or different from the traffic execution request message in step 607.

For example, the URMF network element first sends a paging request to the AMF network element, and invokes a paging or message forwarding service of the AMF network element, and then the AMF network element sends a paging message to the at least one first terminal.

Step 609: The at least one first terminal sends a feedback message of the traffic execution request message to the AMF network element/SMF network element. Correspondingly, the AMF network element/SMF network element obtains, from the at least one first terminal, the feedback message of the traffic execution request message.

For a specific implementation, refer to step 406 or step 506 in the foregoing embodiment. Details are not described herein again.

Step 610: The AMF network element/SMF network element sends a feedback message of the traffic execution request message to the URMF network element, and the URMF network element sends a feedback message of the traffic execution request message to the TA/TS. Correspondingly, the URMF network element obtains, from the AMF network element/SMF network element, the feedback message of the traffic execution request message, and the TA/TS obtains, from the URMF network element, the feedback message of the traffic execution request message.

Step 611: The TA/TS sends configuration information to the at least one first terminal. Correspondingly, the at least one first terminal obtains the configuration information from the TA/TS.

For a specific implementation, refer to step 410 or step 510 in the foregoing embodiment. Details are not described herein again.

Step 612 to step 614 are the same as step 411 to step 413 or step 511 to step 513 described in the foregoing embodiment. Details are not described herein again.

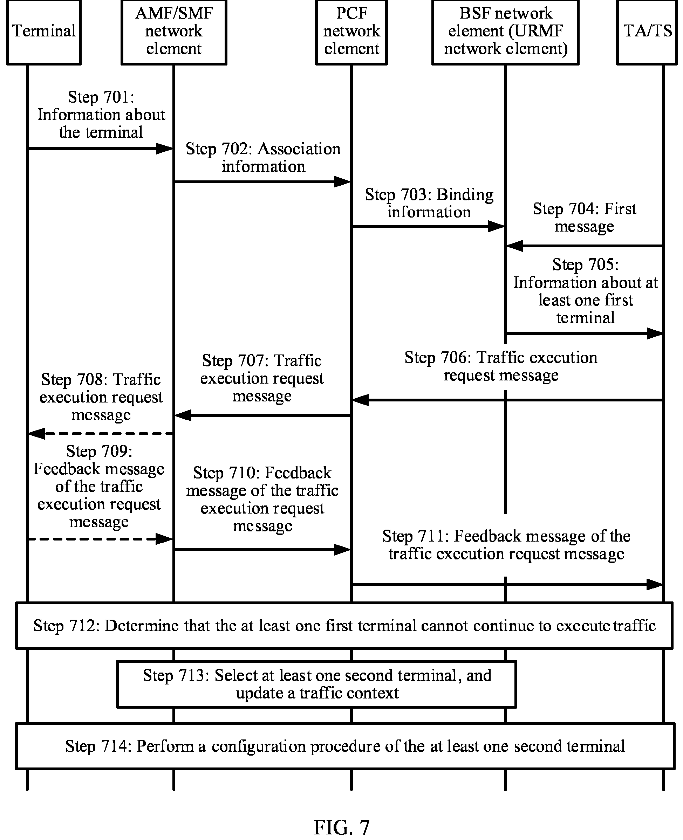

In a possible embodiment of this application, a first network function is integrated into a binding support function (binding support function, BSF). An example in which the first network function is the resource management function (URMF) network element 200, the second network function is the task anchor (task anchor, TA) or the task scheduler (task scheduler, TS) in the control and management function network element 100, and the connection-related network function is the AMF network element/SMF network element is used below to describe a process in which the TA/TS requests the at least one first terminal to execute the traffic when the URMF network element is integrated into the binding support function. FIG. 7 is a schematic flowchart of a resource management method according to an embodiment of this application. A difference between the method and the embodiment shown in FIG. 6 lies in that a URMF network element in the embodiment shown in FIG. 7 is integrated into a binding support function. The method includes the following steps.

Step 701 is the same as step 601 described in the foregoing embodiment. Details are not described herein again.

Step 702: The AMF network element/SMF network element sends policy association information to a PCF network element. Correspondingly, the PCF network element obtains the association information from the AMF network element/SMF network element.

The association information carries information about one or more terminals.

Optionally, the association information may further carry information about traffic currently served by the one or more terminals.

Step 703: The PCF network element sends binding information to a BSF network element. Correspondingly, the BSF network element obtains the binding information from the PCF network element.

The binding information carries information about one or more terminals.

For example, the PCF network element registers the information about the one or more terminals and the binding information with the BSF network element.

Optionally, the binding information may further carry information about traffic currently served by the one or more terminals.

Step 704: The TA/TS sends a first message to the BSF network element. Correspondingly, the BSF network element obtains the first message from the TA/TS.

The first message is used to request to execute the traffic, and includes terminal resource request information or terminal resource query information. In addition to the terminal resource request information or the terminal resource query information, the first message may further carry an identifier or an address of at least one first terminal.

Step 705: The BSF network element sends information about the at least one first terminal or a request acknowledgment result of the first message to the TA/TS. Correspondingly, the TA/TS obtains the information about the at least one first terminal or the request acknowledgment result of the first message from the BSF network element.

The BSF network element further feeds back, to the TA/TS based on the terminal resource request information or the terminal resource query information, information about the PCF network element connected to the at least one first terminal, for example, an identifier and/or an address of the PCF network element.

Step 706: The TA/TS sends traffic execution request message to the PCF network element. Correspondingly, the PCF network element obtains the traffic execution request message from the TA/TS.

Step 707: The PCF network element sends traffic execution request message to the AMF network element/SMF network element. Correspondingly, the AMF network element/SMF network element obtains the traffic execution request message from the PCF network element.

For example, the PCF network element determines, based on the identifier or the address of the at least one first terminal, the AMF network element/SMF network element connected to the at least one first terminal, and sends an access and mobility management (access and mobility management, AM)/session management (session management, SM) policy association update message to the AMF network element/SMF network element, where the AM/SM association update message carries a terminal resource request message.

For example, the PCF network element determines, based on the identifier or the address of the at least one first terminal, the AMF network element/SMF network element connected to the at least one first terminal, and sends the terminal resource request message to the AMF network element/SMF network element.

Step 708 and step 709 are the same as step 608 and step 609 in the foregoing embodiment. Details are not described herein again.

Step 710: The AMF network element/SMF network element sends a feedback message of the traffic execution request message to the PCF network element. Correspondingly, the PCF network element obtains, from the AMF network element/SMF network element, the feedback message of the traffic execution request message.

For example, the AMF network element/SMF network element sends a feedback message of the AM/SM policy association update message to the PCF network element. The feedback message of the AM/SM policy association update message carries the information about the at least one first terminal.

For example, the AMF network element/SMF network element directly sends the information about the at least one first terminal to the PCF network element.

Step 711: The PCF network element sends a feedback message of the traffic execution request message to the TA/TS. Correspondingly, the TA/TS obtains, from the PCF network element, the feedback message of the traffic execution request message.

Step 712 to step 714 are the same as step 411 to step 413, or step 511 to step 513, or step 612 to step 614 described in the foregoing embodiment. Details are not described herein again.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

The foregoing mainly describes the solutions in embodiments of this application from a perspective of interaction between network functions. It may be understood that, to implement the foregoing functions, each network function, for example, the first network function and the second network function, includes a corresponding structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional units of the first network function and the second network function may be obtained through division based on the foregoing method examples. For example, functional units may be obtained through division in correspondence to functions, or two or more functions may be integrated into one processing unit. The integrated unit may be implemented in a form of hardware, or may be implemented in a form of a software functional unit. It should be noted that, in embodiments of this application, division into the units is an example, and is merely a logical function division. In actual implementation, another division manner may be used.

The foregoing describes the method in embodiments of this application with reference to FIG. 3. The following describes a resource management apparatus that is provided in embodiments of this application and that performs the foregoing method. A person skilled in the art may understand that the method and the apparatus may be mutually combined and referenced. The resource management apparatus provided in embodiments of this application may perform the steps performed by the first network function and the second network function in the resource management method shown in FIG. 3.

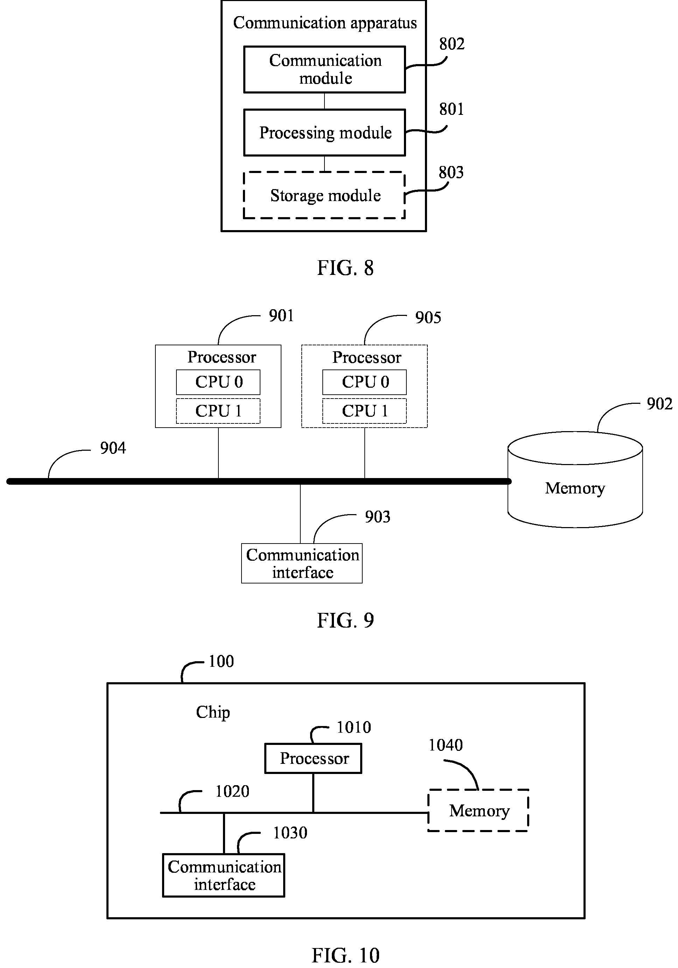

When the integrated unit is used, FIG. 8 shows the resource management apparatus in the foregoing embodiment. The resource management apparatus may include a communication module 802 and a processing module 801.

In an optional implementation, the resource management apparatus may further include a storage module 803, configured to store program code and data of the resource management apparatus.

In an example, the resource management apparatus is a first network function, or a chip used in a first network function. In this case, the processing module 801 is configured to support the resource management apparatus in performing step 302 in the foregoing embodiment. The communication module 802 is configured to support the resource management apparatus in performing a receiving action performed by the first network function in step 301 and a sending action performed by the first network function in step 303 in the foregoing embodiment.

The processing module 801 may be a processor or controller, for example, the processing module 801 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computation function, for example, a combination of one or more microprocessors, or a combination of the digital signal processor and a microprocessor. The communication module may be a transceiver, a transceiver circuit, a communication interface, or the like. The storage module may be a memory.

When the processing module 801 is a processor 901 or a processor 905, the communication module 802 is a communication interface 903, and the storage module 803 is a memory 902, the resource management apparatus in this application may be a communication device shown in FIG. 9.

FIG. 9 is a diagram of a hardware structure of a communication device according to an embodiment of this application. A processor 901, a communication line 904, and at least one communication interface (a communication interface 903 is used as an example for description in FIG. 9) are included.

The processor 901 may be a general-purpose central processing unit (central processing unit, CPU), a microprocessor, an application-specific integrated circuit (application-specific integrated circuit, ASIC), or one or more integrated circuits configured to control program execution in the solutions of this application.

The communication line 904 may include a path for transmitting information between the foregoing components.

The communication interface 903 is configured to exchange information with another apparatus by using, for example, any type of apparatus like a transceiver, and is configured to communicate with another device or a communication network, for example, an Ethernet, a radio access network (radio access network, RAN), or a wireless local area network (wireless local area network, WLAN).

Optionally, the communication device may further include a memory 902.

The memory 902 may be a read-only memory (read-only memory, ROM), another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, optical disc storage (including compressed optical discs, laser discs, optical discs, digital versatile optical discs, and Blu-ray discs), magnetic disk storage media, or another magnetic storage device, or any another medium that can be used to carry or store desired program code in the form of an instruction or a data structure and that can be accessed by a computer, but not limited thereto. The memory may exist independently, and is connected to the processor by using the communication line 904. The memory may alternatively be integrated with the processor.

The memory 902 is configured to store computer-executable instructions for executing the solutions in this application, and the processor 901 controls the execution. The processor 901 is configured to execute the computer-executable instructions stored in the memory 902, to implement a communication method provided in the following embodiments of this application.

Optionally, the computer-executable instructions in this embodiment of this application may also be referred to as application program code. This is not specifically limited in embodiments of this application.

During specific implementation, in an embodiment, the processor 901 may include one or more CPUs, for example, a CPU 0 and a CPU 1 in FIG. 9.

During specific implementation, in an embodiment, the communication device may include a plurality of processors such as the processor 901 and a processor 905 in FIG. 9. Each of the processors may be a single-core (single-CPU) processor, or may be a multi-core (multi-CPU) processor. The processor herein may be one or more devices, circuits, and/or processing cores configured to process data (for example, computer program instructions).

For steps performed by the processor 901 and the processor 905, refer to the steps performed by the processing module 801. For steps performed by the communication interface 903, refer to the steps performed by the communication module 802.

FIG. 10 is a diagram of a structure of a chip 100 according to an embodiment of this application. The chip 100 includes one, two or more (including two) processors 1010 and a communication interface 1030.

Optionally, the chip 100 further includes a memory 1040, and the memory 1040 may include a read-only memory and a random access memory and provide operation instructions and data for the processor 1010. A part of the memory 1040 may further include a non-volatile random access memory (non-volatile random access memory, NVRAM).

In some implementations, the memory 1040 stores the following elements, an execution module or a data structure, a subset thereof, or an extended set thereof.

In this embodiment of this application, a corresponding operation is performed by invoking the operation instructions stored in the memory 1040 (the operation instructions may be stored in an operating system).

The processor 1010 controls a processing operation of any one of a first network function, a second network function, and a terminal. The processor 1010 may also be referred to as a central processing unit (central processing unit, CPU).

The memory 1040 may include a read-only memory and a random access memory and provide instructions and data for the processor 1010. A part of the memory 1040 may further include an NVRAM. For example, during application, the memory 1040, the communication interface 1030, and the memory 1040 are coupled together through a bus system 1020. In addition to a data bus, the bus system 1020 may further include a power bus, a control bus, a status signal bus, and the like. However, for clear description, various buses in FIG. 10 are marked as the bus system 1020.

The methods disclosed in the foregoing embodiments of this application can be applied to the processor 1010, or implemented by the processor 1010. The processor 1010 may be an integrated circuit chip that has a signal processing capability. In an implementation process, the steps in the foregoing methods may be implemented by an integrated logic circuit of hardware in the processor 1010 or by using instructions in a form of software. The processor 1010 may be a general-purpose processor, a digital signal processor (digital signal processor, DSP), an ASIC, a field-programmable gate array (field-programmable gate array, FPGA) or another programmable logic device, a discrete gate, a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1040. The processor 1010 reads information in the memory 1040 and completes the steps in the foregoing methods in combination with hardware in the processor.

In a possible implementation, the communication interface 1030 is configured to perform receiving and sending steps of the first network function in the embodiment shown in FIG. 3. The processor 1010 is configured to perform a processing step of the first network function in the embodiment shown in FIG. 3.

In another possible implementation, the communication interface 1030 is configured to perform receiving and sending steps of the second network function in the embodiment shown in FIG. 3. The processor 1010 is configured to perform a processing step of the second network function in the embodiment shown in FIG. 3.

In an aspect, a computer-readable storage medium is provided. The computer-readable storage medium stores instructions, and when the instructions are run, functions performed by the second network function in FIG. 3 are implemented.

In an aspect, a computer-readable storage medium is provided. The computer-readable storage medium stores instructions, and when the instructions are run, functions performed by the first network function in FIG. 3 are implemented.

In an aspect, a computer program product including instructions is provided. The computer program product includes the instructions. When the instructions are run, functions performed by the second network function in FIG. 3 are implemented.

In an aspect, a computer program product including instructions is provided. The computer program product includes the instructions. When the instructions are run, functions performed by the first network function in FIG. 3 are implemented.

In an aspect, a chip is provided. The chip is used in a first network function, and the chip includes at least one processor and a communication interface. The communication interface is coupled to the at least one processor, and the processor is configured to run instructions, to implement functions performed by the first network function in FIG. 3.

In an aspect, a chip is provided. The chip is used in a second network function, and the chip includes at least one processor and a communication interface. The communication interface is coupled to the at least one processor, and the processor is configured to run instructions, to implement functions performed by the second network function in FIG. 3.

This application provides a resource management system. The resource management system includes a first network function, a second network function, and at least one terminal. The first network function is configured to perform a function performed by the first network function in FIG. 3, and the second network function is configured to perform a function performed by the second network function in FIG. 3. The at least one terminal is configured to provide a non-connectivity service for traffic in the second network function.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape, may be an optical medium, for example, a digital video disc (digital video disc, DVD), or may be a semiconductor medium, for example, a solid-state drive (solid-state drive, SSD).

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the scope of this application. Correspondingly, the specification and accompanying drawings are merely example description of this application defined by the accompanying claims, and are considered as any of or all modifications, variations, combinations or equivalents that cover the scope of this application. It is clearly that a person skilled in the art can make various modifications and variations to this application without departing from the scope of this application. This application is intended to cover these modifications and variations of this application provided that they fall within the scope of protection defined by the following claims and their equivalent technologies.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A resource management method, wherein the method comprises:
receiving a first message from a second network function, wherein the first message comprises first indication information, the first indication information indicates traffic that the second network function requests to execute, and the first message is used to request a first network function to determine a terminal that executes the traffic;
determining at least one first terminal based on the first message, wherein the at least one first terminal is configured to provide a non-connectivity service corresponding to the traffic; and
sending information about the at least one first terminal or a request acknowledgment result of the first message to the second network function.

2. The method according to claim 1, wherein the first message further comprises traffic identifier and/or traffic context identification information;
the traffic identifier identifies the traffic; and
the traffic context identification information identifies traffic context of the traffic.

3. The method according to claim 1 or 2, wherein the first message further comprises second indication information, and the second indication information indicates a range in which the at least one first terminal is located.

4. The method according to claim 3, wherein the second indication information comprises at least one of the following information: capability service information, range information, slice information, network information, a closed access group identifier, a group identifier, domain information, and an identifier of the terminal that executes the traffic;
the capability service information identifies a capability of the terminal that is capable of executing the traffic;
the range information identifies information about a location to which the terminal that is capable of executing the traffic belongs or at which the terminal is capable of providing the service;
the slice information identifies information about a slice to which the terminal that is capable of executing the traffic belongs or at which the terminal is capable of providing the service;
the network information identifies information about a network to which the terminal that is capable of executing the traffic belongs or at which the terminal is capable of providing the service;
the group identifier identifies a group to which the terminal that is capable of executing the traffic belongs; and
the domain information identifies a domain to which the terminal that is capable of executing the traffic belongs.

5. The method according to any one of claims 1 to 4, wherein the method further comprises:
creating the traffic context for the traffic, wherein the traffic context comprises the information about the at least one first terminal and information about the second network function.

6. The method according to any one of claims 1 to 5, wherein the method further comprises:
re-determining at least one second terminal for the traffic when a part or all of the at least one first terminal is not capable of executing the traffic.

7. The method according to any one of claims 1 to 7, wherein the method further comprises:
obtaining, from a third network function, subscription information or policy information corresponding to the traffic and/or the first terminal.

8. The method according to any one of claims 1 to 7, wherein after receiving the first message from the second network function, the method further comprises:
sending a second message to the at least one first terminal, wherein the second message is used to request to execute the traffic; and
receiving a third message from the first terminal, wherein the third message is used to determine whether the at least one first terminal is capable of providing the non-connectivity service for the traffic.

9. The method according to claim 6 or 8, wherein the method further comprises:
updating the information about the at least one first terminal in the traffic context.

10. The method according to claim 9, wherein the method further comprises:
updating a user context of the at least one first terminal, wherein the user context is used to record the information about the at least one first terminal, information about the traffic context, and the information about the second network function.

11. The method according to any one of claims 1 to 10, wherein the method further comprises:
allocating a temporary identifier to the at least one first terminal; and
sending the temporary identifier to the second network function.

12. The method according to claim 11, wherein the method further comprises:
updating the information about the at least one first terminal in the traffic context, so that an updated traffic context comprises the temporary identifier; and
adding the temporary identifier to the user context of the at least one first terminal.

13. The method according to any one of claims 1 to 11, wherein the method further comprises:
obtaining configuration information of the traffic from the second network function, wherein the configuration information comprises the information about the at least one first terminal; and
sending the configuration information to the at least one first terminal or an access network device associated with the at least one first terminal.

14. The method according to claim 13, wherein the configuration information further comprises a reporting trigger condition, and the reporting trigger condition comprises an execution status of the traffic, a location of the at least one first terminal, and a battery level of the at least one first terminal.

15. The method according to any one of claims 1 to 14, wherein the method comprises:
obtaining information about one or more terminals, wherein the one or more terminals comprise the at least one first terminal.

16. The method according to any one of claims 1 to 15, wherein obtaining the information about the one or more terminals comprises:
obtaining the information about the one or more of the terminals from a connection-related network function.

17. The method according to claim 16, wherein the first network function is integrated into the connection-related network function or is independently deployed, and the connection-related network function comprises an access and mobility management function and/or a session management function.

18. The method according to any one of claims 1 to 16, wherein the first network function is integrated into a binding support function, and obtaining the information about the one or more terminals comprises:
obtaining the information about the one or more terminals from a policy control function.

19. The method according to any one of claims 1 to 18, wherein the second network function is configured to obtain a service request, and generate the first indication information based on the service request.

20. A resource management method, wherein the method comprises:
sending a first message to a first network function, wherein the first message comprises first indication information, the first indication information indicates traffic that a second network function requests to execute, and the first message is used to request the first network function to determine a terminal that executes the traffic;
obtaining information about at least one first terminal or a request acknowledgment result of the first message from the first network function;
sending configuration information of the traffic to the first network function, and/or the at least one first terminal, and/or an access network device associated with the at least one first terminal, wherein the configuration information comprises the information about the at least one first terminal, and the at least one first terminal is configured to execute the traffic.

21. The method according to claim 20, wherein the method further comprises:
obtaining a temporary identifier of the at least one first terminal.

22. The method according to claim 20, wherein the method further comprises:
sending a sixth message to the first network function, wherein the sixth message is used to request the first network function to send, to a connection-related network function, information used to request to execute the traffic; and
obtaining, from the first network function, information about executing the traffic by the at least one first terminal.

23. The method according to claim 20, wherein the method further comprises:
sending a seventh message to a policy control function, wherein the seventh message is used to request the policy control function to send, to the connection-related network function, information used to request to execute the traffic; and
obtaining, from the policy control function, information about executing the traffic by the at least one first terminal.

24. A resource management apparatus, wherein the apparatus comprises a communication module and a processing module; and
the processing module is configured to perform a processing action performed by the first network function in the resource management method according to any one of claims 1 to 19, and the communication module is configured to perform a receiving or sending action performed by the first network function in the resource management method according to any one of claims 1 to 19; or
the processing module is configured to perform a processing action performed by the second network function in the resource management method according to any one of claims 20 to 23, and the communication module is configured to perform a receiving or sending action performed by the second network function in the resource management method according to any one of claims 20 to 23.

25. A resource management system, wherein the system comprises a first network function, a second network function, and at least one terminal;
the first network function is used to implement the resource management method according to any one of claims 1 to 19, and the second network function is used to implement the resource management method according to any one of claims 20 to 22; and
the at least one terminal is configured to provide a service for the second network function.

26. A chip, comprising at least one processor and a memory communicatively connected to the at least one processor; and
the memory stores instructions that are capable of being executed by the at least one processor, and the instructions are executed by the at least one processor, so that the at least one processor is capable of performing the resource management method according to any one of claims 1 to 19, or the resource management method according to any one of claims 20 to 23.

27. A computer-readable storage medium, wherein the storage medium stores a computer program, and when the computer program is set to be run, the resource management method according to any one of claims 1 to 19 is performed, or the resource management method according to any one of claims 20 to 23 is performed.
